(19) Europäisches Patentamt
European Patent Office
Office européen des brevets

(11) **EP 4 783 708 A1**

(12) **EUROPEAN PATENT APPLICATION**
published in accordance with Art. 153(4) EPC

(43) Date of publication:
**29.07.2026 Bulletin 2026/31**

(21) Application number: **24888067.6**

(22) Date of filing: **07.11.2024**

(51) International Patent Classification (IPC):
**H04W 72/542** (2023.01) **H04W 24/10** (2009.01)

(52) Cooperative Patent Classification (CPC):
**H04L 5/00; H04W 24/10; H04W 72/542**

(86) International application number:
**PCT/CN2024/130637**

(87) International publication number:
**WO 2025/098456 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.11.2023 CN 202311492289**

(71) Applicant: **HUAWEI TECHNOLOGIES CO., LTD.
Shenzhen 518129 (CN)**

(72) Inventors:
• **YAN, Mao
Shenzhen, Guangdong 518129 (CN)**
• **LIU, Fengwei
Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(54) **MEASUREMENT REPORTING METHOD AND RELATED APPARATUS**

(57) A measurement reporting method and a related apparatus are provided. The method includes: A first communication apparatus receives a plurality of reference signals from a second communication apparatus, measures the plurality of reference signals to obtain a plurality of groups of channel information, and sends the plurality of groups of channel information to the second communication apparatus. The plurality of groups of channel information include a first type of channel information and/or a second type of channel information. The first type of channel information is to be reported as indicated by the second communication apparatus or as determined, by the first communication apparatus according to a first preset rule. The second type of channel information is to be reported as determined by the first communication apparatus according to a second preset rule. Compared with reporting only one group of channel information, this method enables the second communication apparatus to obtain more comprehensive channel information, thereby facilitating resource scheduling and improving overall network performance.

```
                           500
Terminal                              Network
device                                device
    |   505: Reference signal configuration   |
    |<- - - - - - - - information - - - - - - -|
    |                                          |
    |      510: Plurality of reference signals |
    |<-----------------------------------------|
    |                                          |
 ___v_____
| 520: Measure the plurality of reference      |
|  signals to obtain a plurality of groups of  |
|           channel information                |
|_____|
    |                                          |
    |       530: Plurality of groups of        |
    |          channel information             |
    |----------------------------------------->|
```

FIG. 5

## Description

This application claims priority to Chinese Patent Application No. 202311492289.9, filed with the China National Intellectual Property Administration on November 9, 2023 and entitled "MEASUREMENT REPORTING METHOD AND RELATED APPARATUS", which is incorporated herein by reference in its entirety.

## TECHNICAL FIELD

This application relates to the communication field, and in particular, to a measurement reporting method and a related apparatus.

## BACKGROUND

In a wireless communication system, a network device may send configuration information to a terminal device by using radio resource control (radio resource control, RRC) signaling to configure reference signal resources and related parameters for measurement result reporting. Correspondingly, the terminal device measures reference signals (reference signals, RSs) based on the configuration information and reports channel state information (channel state information, CSI).

Beamforming technology is used to limit the energy of radio signals within a beam (beam) direction, thereby improving signal reception efficiency. Beamforming techniques include, for example, digital beamforming (digital beamforming, DBF), analog beamforming (analog beamforming, ABF), and hybrid beamforming (hybrid beamforming, HBF). In a communication system using ABF or HBF, the network device may select multiple beam directions and send reference signals through different beams for the terminal device to measure, thereby identifying beams with better quality.

When analog beamforming or hybrid beamforming is used, the network device can only schedule beams in a time division manner. Currently, terminal devices may report channel information of their respective target beams. The target beam may be a beam with its signal quality higher than a specified threshold among a plurality of beams, for example, a beam with the strongest signal quality. For example, a terminal device 1 reports only channel information of a beam 1, and a terminal device 2 reports only channel information of a beam 2. In this way, when the network device schedules the beam 2, since the terminal device 1 has not reported the channel information of the beam 2, the network device cannot obtain the channel state between the terminal device 1 and the network device for the beam 2. Consequently, the network device cannot schedule resources for both the terminal device 1 and the terminal device 2, resulting in poor overall network performance.

## SUMMARY

This application provides a measurement reporting method and a related apparatus, aiming to provide more comprehensive channel information, thereby facilitating resource scheduling by a network device and improving overall network performance.

According to a first aspect, this application provides a measurement reporting method. The method may be performed by a first communication apparatus. The first communication apparatus may be a terminal device, or may be a component (such as a chip or a chip system) configured in the terminal device, or may be a logical module or software that can implement all or some functions of the terminal device. This is not limited in this application.

For example, the method includes: receiving a plurality of reference signals from a second communication apparatus; measuring the plurality of reference signals to obtain a plurality of groups of channel information; and sending the plurality of groups of channel information to the second communication apparatus, where the plurality of groups of channel information include a first type of channel information and/or a second type of channel information, the first type of channel information is to be reported as indicated by the second communication apparatus or as determined by the first communication apparatus according to a first preset rule, and the second type of channel information is to be reported as determined according to a second preset rule.

The channel information may also be referred to as a channel response. A name of the channel information is not specifically limited in this application. For example, CSI is a type of channel information, which is information that can reflect a channel feature or channel quality.

The plurality of groups of channel information include the first type of channel information and/or the second type of channel information. In a possible design, the plurality of groups of channel information may be the first type of channel information. In another possible design, the plurality of groups of channel information may be the second type of channel information. In still another possible design, a part of the plurality of groups of channel information is the first type of channel information, and the other part of channel information is the second type of channel information.

In this application, one reference signal may correspond to one group of channel information. For example, the first communication apparatus may measure the one reference signal to obtain the one group of channel information. In addition, two or more reference signals may also correspond to one group of channel information. For example, the first communication apparatus may measure the two reference signals to obtain the one group of channel information. This is not limited in this application.

In the foregoing technical solution, after receiving the plurality of reference signals, the first communication apparatus may measure the plurality of reference signals, to obtain the plurality of groups of channel information and report the plurality of groups of channel information to the second communication apparatus. Compared with one group of reported channel information, the channel information that can be obtained by the second communication apparatus is more comprehensive, thereby facilitating resource scheduling and improving overall network performance. In addition, the plurality of groups of channel information reported by the first communication apparatus may include the first type of channel information, and this type of channel information may be reported as indicated by the second communication apparatus. In other words, the second communication apparatus may flexibly indicate, based on an actual requirement, specific channel information that the first communication apparatus is expected to report, thereby facilitating resource scheduling by the second communication apparatus and improving overall network performance.

According to a second aspect, this application provides a measurement reporting method. The method may be performed by a second communication apparatus. The second communication apparatus may be a network device, or may be a component (such as a chip or a chip system) configured in the network device, or may be a logical module or software that can implement all or some functions of the network device. This is not limited in this application.

For example, the method includes: sending a plurality of reference signals to a first communication apparatus; and receiving a plurality of groups of channel information from the first communication apparatus, where the plurality of groups of channel information are obtained by measuring the plurality of reference signals, the plurality of groups of channel information include a first type of channel information and/or a second type of channel information, the first type of channel information is to be reported as indicated by the second communication apparatus or as determined by the first communication apparatus according to a first preset rule, and the second type of channel information is to be reported as determined according to a second preset rule.

The channel information may also be referred to as a channel response. A name of the channel information is not specifically limited in this application. For example, CSI is a type of channel information, which is information that can reflect a channel feature or channel quality.

The plurality of groups of channel information include the first type of channel information and/or the second type of channel information. In a possible design, the plurality of groups of channel information may be the first type of channel information. In another possible design, the plurality of groups of channel information may be the second type of channel information. In still another possible design, a part of the plurality of groups of channel information is the first type of channel information, and the other part of channel information is the second type of channel information. In the foregoing technical solution, the second communication apparatus may obtain the plurality of groups of channel information. Compared with one group of channel information, the channel information that can be obtained by the second communication apparatus is more comprehensive, thereby facilitating resource scheduling and improving overall network performance. In addition, the plurality of groups of channel information include the first type of channel information, and this type of channel information may be reported as indicated by the second communication apparatus. In other words, the second communication apparatus may flexibly indicate, based on an actual requirement, specific channel information that the first communication apparatus is expected to report, thereby facilitating resource scheduling by the second communication apparatus and improving overall network performance.

In this application, in a possible scenario, the first communication apparatus is a terminal device, and the second communication apparatus is a network device. In other words, the method provided in this application is applicable to measurement reporting of a downlink reference signal. In another possible scenario, the first communication apparatus is a network device, and the second communication apparatus is a terminal device. In other words, the method provided in this application may be further applicable to measurement reporting of an uplink reference signal. This is not limited in this application.

With reference to the first aspect and the second aspect, in some possible implementations, the first type of channel information is channel information corresponding to one or more group indexes indicated by the second communication apparatus, and each of the plurality of groups of channel information corresponds to a group index.

With reference to the first aspect and the second aspect, in some possible implementations, the first type of channel information is obtained by measuring a reference signal carried on a target reference signal resource, and an identifier of the target reference signal resource and/or an identifier of a resource set to which the target reference signal resource belongs are/is indicated by the second communication apparatus.

The reference signal carried on the target reference signal resource is one or more reference signals (or some reference signals) among the plurality of reference signals. The second communication apparatus may indicate the identifier of the target reference signal resource and/or the identifier of the resource set to which the target reference signal resource belongs to the first communication apparatus, so that the first communication apparatus reports the channel information obtained by measuring the reference signal carried on the target reference signal resource.

In a possible case, resources corresponding to the plurality of reference signals belong to a same resource set, and the second communication apparatus may indicate the identifier of the target reference signal resource to the first communication apparatus.

In another possible case, resources corresponding to the plurality of reference signals are divided into at least two resource sets, and the second communication apparatus may indicate the identifier of the target reference signal resource to the first communication apparatus, or may indicate the identifier of the target reference signal resource and the identifier of the resource set to which the target reference signal resource belongs to the first communication apparatus.

With reference to the first aspect and the second aspect, in some possible implementations, the first type of channel information is obtained by measuring the reference signal carried on the target reference signal resource, the target reference signal resource is determined according to the first preset rule, and the first preset rule includes any one of the following: the target reference signal resource is an $m^{th}$ reference signal resource to an $n^{th}$ reference signal resource in at least one reference signal resource set, m and n are integers, and $n \geq m$; the target reference signal resource is a reference signal resource corresponding to a resource used for reporting CSI (or referred to as a CSI reporting resource); the target reference signal resource is a resource corresponding to a reference signal with a highest priority among the plurality of reference signals, and a priority of each of the plurality of reference signals is indicated by the second communication apparatus; or the target reference signal resource is a resource corresponding to a reference signal with a highest reference signal received power (reference signal received power, RSRP) among the plurality of reference signals.

Herein, m and n may be indicated by the second communication apparatus, or may be predefined. This is not limited in this application. In addition, each of the at least one reference signal resource set includes resources corresponding to one or more of the plurality of reference signals. In other words, the resources corresponding to the one or more reference signals may be divided into one or more resource sets, and the target reference signal resource may be an $m^{th}$ reference signal resource to an $n^{th}$ reference signal resource in at least one of the one or more resource sets.

In a possible case, m=n, and the target reference signal resource is the $m^{th}$ reference signal resource to the $n^{th}$ reference signal resource in the at least one reference signal resource set, which may be understood as that the target reference signal resource is the $m^{th}$ (or $n^{th}$) reference signal resource in each of the at least one reference signal resource set. For example, the target reference signal resource is the $1^{st}$ reference signal resource in each of the at least one reference signal resource set. For another example, the target reference signal resource is the last reference signal resource in each of the at least one reference signal resource set.

In another possible case, n>m, and the target reference signal resource is the $m^{th}$ reference signal resource to the $n^{th}$ reference signal resource in the at least one reference signal resource set, which may be understood as that the target reference resource includes (n-m+1) reference signal resources in each of the at least one reference signal resource set. For example, resources corresponding to the plurality of reference signals are divided into two reference signal resource sets, each reference signal resource set includes five reference signal resources, and the target reference signal resource may be the $1^{st}$ reference signal resource to the $3^{rd}$ reference signal resource in each of the two reference signal resource sets.

In addition, it may be understood that, that the target reference signal resource is the resource corresponding to the reference signal with the highest priority among the plurality of reference signals is merely an example, and should not constitute any limitation on this application. For example, in actual application, the target reference signal resource may be a resource corresponding to a reference signal with its priority greater than or equal to a priority threshold among the plurality of reference signals. Similarly, that the target reference signal resource is the resource corresponding to the reference signal with the highest RSRP among the plurality of reference signals is also merely an example. For example, the target reference signal resource may be a resource corresponding to a reference signal with its RSRP greater than or equal to an RSRP threshold among the plurality of reference signals.

With reference to the first aspect and the second aspect, in some possible implementations, the second type of channel information is channel information obtained by measuring a target reference signal determined according to the second preset rule, and the second preset rule includes one or more of the following: the target reference signal is a reference signal with a highest RSRP among the plurality of reference signals; the target reference signal is a reference signal for which a difference between its RSRP and a previously reported RSRP is less than or equal to a first threshold among the plurality of reference signals; the target reference signal is a reference signal among the plurality of reference signals other than a reference signal corresponding to the first type of channel information; or the target reference signal is a reference signal having a correlation with a reference signal corresponding to the first type of channel information that is greater than or equal to a second threshold.

That the target reference signal is the reference signal with the highest RSRP among the plurality of reference signals is merely an example, and should not constitute any limitation on this application. For example, in actual application, the target reference signal may be a reference signal with its RSRP greater than or equal to an RSRP threshold among the plurality of reference signals.

The reference signal corresponding to the first type of channel information may be understood as at least one reference signal used to obtain the first type of channel information through measurement. In other words, channel information obtained by measuring the at least one reference signal is denoted as the first type of channel information.

The target reference signal is the reference signal other than the reference signal corresponding to the first type of channel information among the plurality of reference signals, which may be understood as that a target reference signal corresponding to the second type of channel information is any one or more reference signals among the plurality of reference signals other than the reference signal corresponding to the first type of channel information. In other words, if the reference signal corresponding to the second type of channel information is the same as the reference signal corresponding to the first type of channel signal, the channel information corresponding to the same reference signal is reported only once. For example, reference signals corresponding to the first type of channel information include a reference signal 1, a reference signal 2, a reference signal 3, and a reference signal 4. If reference signals corresponding to the second type of channel information determined according to the second preset rule are the reference signal 1, the reference signal 2, and a reference signal 5, only channel information corresponding to the reference signal 5 is reported in the second type of channel information.

The first communication apparatus may report the channel information obtained by measuring the target reference signal determined according to the second preset rule. In this way, the first communication apparatus may flexibly select a more suitable beam, so as to improve communication link quality, thereby maximizing a rate at which the first communication apparatus is served.

In this application, the first type of channel information may need to be reported, and the second type of channel information is optionally reported. However, this should not constitute any limitation on this application. For example, in an implementation, the second type of channel information may need to be reported, and the first type of channel information is optionally reported. In other words, the plurality of groups of channel information reported by the first communication apparatus need to include the second type of channel information, and the second type of channel information is determined according to the second preset rule. Optionally, the plurality of groups of channel information may further include the first type of channel information, and the first type of channel information is to be reported as indicated by the second communication apparatus or as determined by the first communication apparatus according to the first preset rule.

With reference to the first aspect and the second aspect, in some possible implementations, each group of channel information includes a precoding matrix indicator (precoding matrix indicator, PMI), a channel quality indicator (channel quality indicator, CQI), a rank indicator (rank indicator, RI), and a reference signal resource indicator (CSI-RS resource indicator, CRI).

According to a third aspect, this application provides a communication apparatus, including a module or a unit configured to implement the method according to any one of the first aspect or the possible implementations of the first aspect, or including a module or a unit configured to implement the method according to any one of the second aspect or the possible implementations of the second aspect. Each module or unit may implement a corresponding function by executing a computer program.

For example, the communication apparatus in the third aspect is a terminal device or a component configured in the terminal device, such as a chip, a chip system, or a processor; or the communication apparatus in the third aspect is a network device or a component configured in the network device, such as a chip, a chip system, or a processor.

According to a fourth aspect, this application provides a communication apparatus, including a processor. The processor is configured to perform the measurement reporting method according to any one of the first aspect or the possible implementations of the first aspect or the measurement reporting method according to any one of the second aspect or the possible implementations of the second aspect.

Optionally, the apparatus may further include a memory, configured to store instructions and data. The memory is coupled to the processor. When executing the instructions stored in the memory, the processor may implement the methods described in the foregoing aspects.

Optionally, the apparatus may further include a communication interface. The communication interface is used by the apparatus to communicate with another communication apparatus. For example, the communication interface may be a transceiver, a circuit, a bus, a module, a pin, or another type of communication interface.

For example, the communication apparatus provided in the fourth aspect is a chip or a chip system.

According to a fifth aspect, this application provides a communication apparatus, including a processor and a communication interface. The communication interface is configured to receive a signal from a communication apparatus other than the communication apparatus and transmit the signal to the processor, or send a signal from the processor to a communication apparatus other than the communication apparatus. The processor implements the measurement reporting method according to any one of the first aspect or the possible implementations of the first aspect or the measurement reporting method according to any one of the second aspect or the possible implementations of the second aspect by using a logic circuit or by executing code instructions. For example, the communication interface may be a transceiver, a circuit, a bus, a module, a pin, or another type of communication interface.

Optionally, the apparatus further includes a memory, configured to store instructions and data. The memory is coupled to the processor. When executing the instructions stored in the memory, the processor may implement the measurement reporting method according to any one of the first aspect or the possible implementations of the first aspect or the measurement reporting method according to any one of the second aspect or the possible implementations of the second aspect.

According to a sixth aspect, this application provides a communication apparatus, including a processor and a memory. The memory is configured to store instructions and data. When executing the instructions stored in the memory, the processor may implement the measurement reporting method according to any one of the first aspect or the possible implementations of the first aspect or the measurement reporting method according to any one of the second aspect or the possible implementations of the second aspect.

Optionally, the apparatus further includes a communication interface. The communication interface is used by the apparatus to communicate with another communication apparatus. For example, the communication interface may be a transceiver, a circuit, a bus, a module, a pin, or another type of communication interface.

For example, the communication apparatus in the fifth aspect or the sixth aspect is a terminal device or a network device.

According to a seventh aspect, this application provides a chip system. The chip system includes at least one processor, configured to implement the functions in any one of the first aspect or the possible implementations of the first aspect or the functions in any one of the second aspect or the possible implementations of the second aspect, for example, receive or process data and/or information in the foregoing method.

In a possible design, the chip system further includes a memory, the memory is configured to store program instructions and data, and the memory is located inside or outside the processor.

The chip system may include a chip, or may include a chip and another discrete component.

According to an eighth aspect, this application provides a computer-readable storage medium, including a computer program. When the computer program is run on a computer, the computer is enabled to implement the method according to any one of the first aspect or the second aspect or the possible implementations of the first aspect or the second aspect.

According to a ninth aspect, this application provides a computer program product. The computer program product includes a computer program (which may also be referred to as code or instructions). When the computer program is run, a computer is enabled to perform the method according to any one of the first aspect or the second aspect or the possible implementations of the first aspect or the second aspect.

According to a tenth aspect, a communication system is provided, including the foregoing first communication apparatus and second communication apparatus. The first communication apparatus may be configured to implement the method in any one of the first aspect or the possible implementations of the first aspect, and the second communication apparatus may be configured to implement the method in any one of the second aspect or the possible implementations of the second aspect.

Technical solutions of the third aspect to the tenth aspect of this application correspond to those of the first aspect and the second aspect of this application. Beneficial effects achieved by the aspects and corresponding feasible implementations are similar, and details are not described again.

## BRIEF DESCRIPTION OF DRAWINGS

FIG. 1 is a diagram of an architecture of a communication system applicable to a measurement reporting method according to this application;

FIG. 2 is a diagram of an access network device applicable to a measurement reporting method according to this application;

FIG. 3 is a diagram of hybrid beamforming or digital beamforming according to an embodiment of this application;

FIG. 4 is a diagram of sending a reference signal by a network device;

FIG. 5 is a schematic flowchart of a measurement reporting method according to an embodiment of this application;

FIG. 6a and FIG. 6b are diagrams of different quantities of configured reference signal resource sets according to an embodiment of this application;

FIG. 7 is a block diagram of a communication apparatus according to an embodiment of this application;

FIG. 8 is another block diagram of a communication apparatus according to an embodiment of this application; and

FIG. 9 is still another diagram of a structure of a communication apparatus according to an embodiment of this application.

**DESCRIPTION OF EMBODIMENTS**

For ease of understanding of embodiments of this application, the following descriptions are first provided.

First, in this application, an indication includes an explicit indication (also referred to as a direct indication) and an implicit indication (also referred to as an indirect indication). Explicitly indicating information A refers to including the information A. Implicitly indicating information A refers to indicating the information A by using a correspondence between the information A and information B and directly indicating the information B, where the correspondence between the information A and the information B may be predefined, prestored, pre-burned, or preconfigured; or indicating the information A by using the information B and a preset rule.

Second, in this application, that information C is used to determine information D includes that the information D is determined based only on the information C, and also includes that the information D is determined based on the information C and other information. In addition, that the information C is used to determine the information D may further include an indirect determining case, for example, a case in which the information D is determined based on information E, and the information E is determined based on the information C.

Third, in this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects, but does not exclude an "and" relationship between the associated objects. A specific indicated meaning may be understood with reference to the context. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fourth, in this application, prefixes such as "first" and "second" are merely intended to distinguish and describe different things belonging to a same name category, and are not intended to constrain a sequence, sizes, or a quantity of things. For example, a "first threshold" and a "second threshold" are merely different thresholds, and have no time sequence relationship, magnitude relationship, or priority relationship.

Fifth, "sending" and "receiving" in this application indicate signal transmission directions. For example, "sending information to a second device" may be understood as that a destination end of the information is the second device, and may include direct sending through an air interface, or include indirect sending through an air interface by another unit or module. "Receiving information from a second device" may be understood as that a source end of the information is the second device, and may include direct receiving from the second device through an air interface, or may include indirect receiving from the second device from another unit or module through an air interface. "Sending" may alternatively be understood as "output" of a chip interface, and "receiving" may alternatively be understood as "input" of the chip interface.

In other words, sending and receiving may be performed between devices, for example, between a second device and a first device, or may be performed in a device. For example, sending or receiving is performed between components, modules, chips, software modules, or hardware modules in the device through a bus, a cable, or an interface.

Sixth, in this application, both "when" and "if" mean that an apparatus performs corresponding processing in an objective case, are not intended to limit time, do not require the apparatus to necessarily have a determining action during implementation, and do not mean any other limitation.

Seventh, in this application, the term "example", "such as", or "for example" represents giving an example, an illustration, or a description. Any embodiment or design scheme described as "example", "such as", or "for example" in this application should not be explained as being more preferred or having more advantages than another embodiment or design scheme. Specifically, use of the term such as "example", "such as", or "for example" is intended to present a related concept in a specific manner.

Eighth, in this specification, the method provided in this application is described by using measurement reporting of a downlink reference signal as an example, but this should not constitute a limitation on a scenario to which the solutions are applicable. In measurement reporting of an uplink reference signal, a network device may configure a plurality of reference signal resources for a terminal device, to receive reference signals on the foregoing resources, and perform measurement reporting. A person skilled in the art may obtain a measurement reporting procedure of an uplink reference signal by simply performing transformation on embodiments of this specification based on a same concept. For brevity, details are not described in this specification.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or a new radio access technology (new radio access technology, NR). The 5G mobile communication system may include non-standalone (non-standalone, NSA) and/or standalone (standalone, SA). The technical solutions provided in this application may be further applied to a future communication system, for example, a 6th generation (6th generation, 6G) mobile communication system. This is not limited in this application.

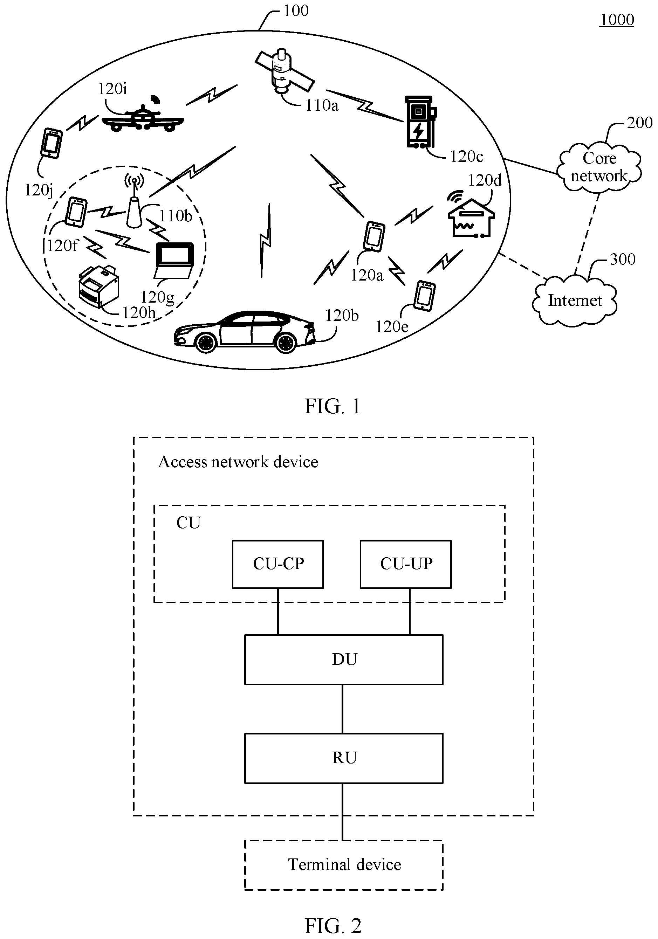

FIG. 1 is a diagram of an architecture of a communication system applicable to a measurement reporting method according to this application. FIG. 1 is a diagram of a possible and non-limiting system architecture. As shown in FIG. 1, the communication system 1000 includes a radio access network (radio access network, RAN) 100 and a core network (core network, CN) 200. The RAN 100 includes at least one RAN node (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open radio access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a RAN entity, an access node, or the like, and is a component of the communication system, to help the terminal device implement radio access. A plurality of RAN nodes 110 in the communication system 1000 may be nodes of a same type, or may be nodes of different types. In some scenarios, roles of the RAN node 110 and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The RAN node 110 and the terminal device 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, the plurality of RAN nodes coordinate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP) or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device may also be referred to as a terminal, a user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like.

In embodiments of this application, the network device may be, for example, the RAN node 110 shown in FIG. 1, and the terminal device may be, for example, the terminal device 120 shown in FIG. 1. Types of the network device and the terminal device are not specifically limited in this application.

In addition, the terminal device and the network device may be hardware devices; or may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

FIG. 2 is a diagram of an access network device applicable to a measurement reporting method according to this application. As shown in FIG. 2, the access network device includes one or more CUs, one or more DUs, and one or more RUs. For clarity, FIG. 2 shows only one CU, one DU, and one RU. The CU is configured to be connected to a core network and one or more DUs. Optionally, the CU may have some functions of the core network. The CU may include a CU-CP and a CU-UP.

The CU and the DU may be configured based on protocol layer functions of a radio network implemented by the CU and the DU. For example, the CU is configured to implement functions of a packet data convergence protocol (packet data convergence protocol, PDCP) layer and protocol layers (for example, an RRC layer and/or a service data adaptation protocol (service data adaptation protocol, SDAP) layer) above the PDCP layer; and the DU is configured to implement functions of protocol layers (for example, a radio link control (radio link control, RLC) layer, a medium access control (media access control, MAC) layer, and/or a physical (physical, PHY) layer) below the PDCP layer. For another example, the CU is configured to implement functions of protocol layers (for example, an RRC layer and/or an SDAP layer) above a PDCP layer; and the DU is configured to implement functions of the PDCP layer and protocol layers (for example, an RLC layer, a MAC layer, and/or a PHY layer) below the PDCP layer.

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element configured to implement a control plane function in the core network. The network element configured to implement the control plane function in the core network may be an access and mobility function network element, for example, an access and mobility management function (access and mobility management function, AMF) network element in a 5G system. The AMF network element is configured to be responsible for mobility management in a mobile network, for example, location update of a terminal device, network registration of the terminal device, and handover of the terminal device.

The CU-UP may interact with a network element configured to implement a user plane function in the core network. The network element configured to implement the user plane function in the core network, for example, a user plane function (user plane function, UPF) network element in the 5G system, is configured to be responsible for forwarding and receiving data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have some processing functions of a protocol layer. For example, some functions of the RLC layer and functions of a protocol layer above the RLC layer are set on the CU, and remaining functions of the RLC layer and functions of a protocol layer below the RLC layer are set on the DU. For another example, division of functions of the CU or the DU may be performed based on service types or other system requirements. For example, division may be performed based on a delay. In this case, functions whose processing time needs to satisfy a small delay requirement are set on the DU, and functions whose processing time does not need to satisfy the delay requirement are set on the CU.

The DU and the RU may cooperate to jointly implement functions of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher layer function of the PHY layer, and the RU is configured to: implement a lower layer function of the PHY layer, or implement the lower layer function and a radio frequency function. The higher layer function of the physical layer may include some functions of the physical layer, and these functions are closer to the MAC layer. The lower layer function of the physical layer may include some other functions of the physical layer, and these other functions are closer to an intermediate radio frequency side.

To better understand the method provided in embodiments of this application, the following briefly describes terms in this application.

1. An antenna port: The antenna port is a logical concept, and there is no direct correspondence between an antenna port and a physical antenna. The antenna port is usually associated with a reference signal, and may be understood as a transceiver interface on a channel through which the reference signal passes. For a low-frequency system, one antenna port may correspond to one or more antenna array elements. These array elements jointly send a reference signal. A receiver may consider these array elements as a whole, and does not need to distinguish between these array elements. For a high-frequency system, one antenna port may correspond to one beam. Similarly, a receiver only needs to consider the beam as an interface, and does not need to distinguish between array elements.

2. Beam: The beam is a main lobe of a radiation pattern of an antenna or an antenna array, and is formed by superposing radiation signals of antenna modules. A transmit beam may refer to distribution of signal strength formed in different directions in space after a signal is transmitted through an antenna, and a receive beam may refer to distribution of signal strength in different directions in space of a radio signal received through an antenna. It may be understood that one or more antenna ports forming one beam may also be considered as one antenna port set or one antenna port group (port group for short). One beam may include one or more antenna ports, configured to transmit a reference signal, a data channel, a control channel, a sounding signal, or the like.

The beam is a communication resource, and may be a wide beam, a narrow beam, or another type beam. A beamforming technology may be a digital beamforming technology, an analog beamforming technology, or a hybrid beamforming technology.

The beam may be represented in a protocol by a spatial filter (spatial filter), a spatial parameter (spatial parameter), a sending manner, a sending mode, or the like. The sending manner represents digital weighting and/or analog weighting. Different sending manners correspond to different digital weights, different analog weights, or a combination of different digital weights and different analog weights. In an actual communication system, the beam may be represented by a resource (or a signal, a reference signal, or a port group).

3. Beamforming: Beamforming is also referred to as beamforming. With development of multiple-input multiple-output (multiple-input multiple-output, MIMO) technologies, both a transmitting end and a receiving end may use a plurality of antennas for signal transmission and reception, so as to obtain a diversity gain, implement spatial multiplexing, and obtain a higher transmission rate. However, due to interference and diffraction of electromagnetic waves, electromagnetic wave signals transmitted by a plurality of antennas may have different phases. After the electromagnetic waves of the different phases are superposed, the electromagnetic waves are enhanced in some directions and weakened in some directions. The essence of beamforming lies in changing an amplitude and a phase of a signal of each transmit antenna, so that a superposition effect of a plurality of antennas is a beam aligned in some directions in space. That is, energy is concentrated in a few directions, and is zero or close to zero in an extremely large part of space.

Digital beamforming may be implemented by adjusting an amplitude and/or a phase of a signal in digital domain. Digital beamforming may be specifically implemented through precoding. Precoding may implement subband-level digital weighting, allowing different digital weights for different subbands; or precoding may implement full-band-level digital weighting, with a same digital weight used across the entire frequency band.

However, after the processing in digital domain is completed, operations of the transmitting end such as digital-to-analog conversion and up-conversion, and operations of the receiving end such as analog-to-digital conversion and down-conversion need to be performed, which are generally implemented through a radio frequency link (radio frequency chain, RF chain). Each radio frequency link may include hardware such as a digital-to-analog converter (digital-to-analog convertor, DAC) configured to implement the operation of the transmitting end, an analog-to-digital converter (analog-to-digital, ADC) configured to implement the operation of the receiving end, a frequency mixer for up-conversion, and a power amplifier for power amplification. In a digital beamforming system, a corresponding radio frequency link needs to be configured for each antenna. Therefore, a quantity of radio frequency links is in direct proportion to a quantity of antennas.

Analog beamforming may be mainly implemented by adjusting a phase of a signal through a phase shifter in analog domain. Analog beamforming can only implement full-band analog weighting, that is, a same weight is shared across the entire frequency band.

In a large-scale antenna array, for example, in a 5G system, there may be hundreds of antennas, and configuring a corresponding radio frequency link for each antenna causes large hardware costs. Therefore, hybrid beamforming emerges.

Hybrid beamforming combines digital beamforming and analog beamforming, to form a focusing effect on a specific direction in space, that is, a beam, through digital weighting and analog weighting. Hybrid beamforming can greatly reduce a quantity of radio frequency links, thereby reducing hardware overheads.

In an implementation, a plurality of digital channels perform same digital weighting across the entire frequency band, which has an effect similar to analog beamforming.

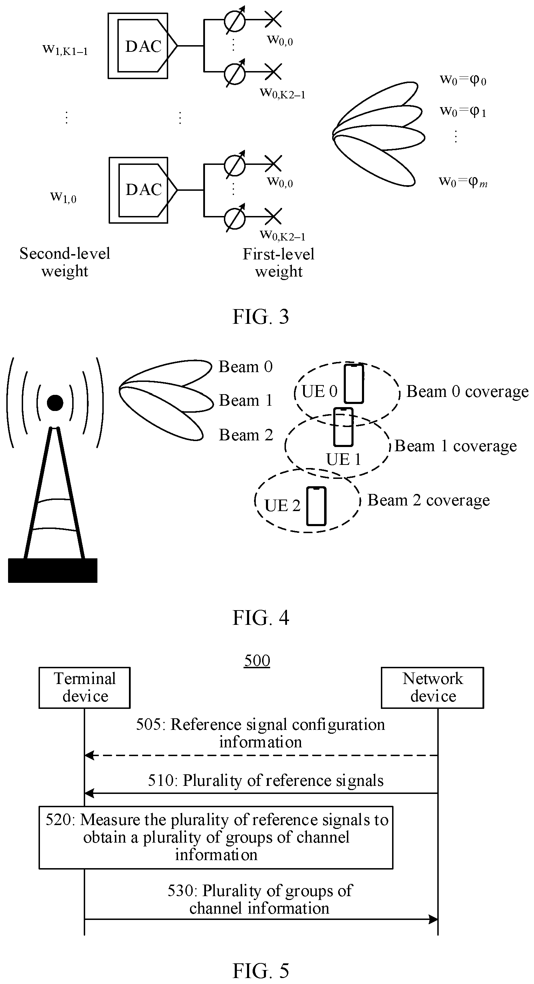

In another implementation, digital channels (or digital weighting) may be divided into a plurality of levels. A first level performs same digital weighting across the entire frequency band, and a second level performs subband weighting, which has an effect equivalent to hybrid beamforming. For ease of understanding, FIG. 3 is a diagram of hybrid beamforming (or digital beamforming). In the manner shown in FIG. 3, digital channels are evenly divided into K1 (K1 is a positive integer) groups (or K1 subarrays or K1 port groups), and quantities of digital channels in all the groups (or subarrays or port groups) are the same, for example, K2 (K2 is a positive integer). Digital beamforming and analog beamforming may be considered as two levels of beamforming. A first level of beamforming is analog beamforming, and a weight of the first level of beamforming is $\mathbf{w}_0 = [\, w_{0,0}\ w_{0,1} \cdots w_{0,K2-1}\,]$, where K2 elements correspond to K2 digital channels. The weight of the first level of beamforming is wideband, and each group uses a same first-level weight, that is, $\mathbf{w}_0$. A second level of beamforming is digital beamforming, and a weight of the second level of beamforming is $\mathbf{w}_1 = [w_{1,0} \cdots w_{1,K1-1}]$, where K1 elements correspond to K1 digital channels. The weight of the second level of beamforming is a subband, and second-level weights of different groups (or subarrays or port groups) are different. In other words, a weight matrix corresponding to the digital channels is $\mathbf{w}_0 \otimes \mathbf{w}_1$ or $\mathbf{w}_1 \otimes \mathbf{w}_0$, where $\otimes$ represents a Kronecker product, and $\varphi_m$ represents a weighting vector corresponding to the first-level weight. It can be learned that different weighting vectors have different beam directions. Therefore, a network device may adjust the beam direction by adjusting the weighting vector.

4. Reference signal: The reference signal may be used for channel measurement, channel estimation, beam quality monitoring, or the like. According to an LTE or NR protocol, an uplink reference signal may include, for example, a sounding reference signal (sounding reference signal, SRS), a physical uplink control channel (physical uplink control channel, PUCCH)-demodulation reference signal (demodulation reference signal, DMRS) (PUCCH-DMRS), a physical uplink shared channel (physical uplink shared channel, PUSCH)-demodulation reference signal (PUSCH-DMRS), a phase noise tracking reference signal (phase noise tracking reference signal, PTRS), or an uplink positioning signal (uplink positioning RS). A downlink reference signal may include, for example, a synchronization signal block (synchronization signal block, SSB), a physical downlink control channel (physical downlink control channel, PDCCH)-demodulation reference signal (PDCCH-DMRS), a physical downlink shared channel (physical downlink shared channel, PDSCH)-demodulation reference signal (PDSCH-DMRS), a PTRS, a channel state information reference signal (channel state information reference signal, CSI-RS), a cell signal (cell reference signal, CRS) in LTE, a time/frequency-domain tracking synchronization signal (tracking reference signal, TRS) in NR, or a downlink positioning signal (positioning RS).

The reference signal in embodiments of this application is mainly used for channel measurement, for example, may be a CSI-RS used in downlink channel measurement, or may be an SRS used in uplink channel measurement, or may be another reference signal that may be used for channel measurement. This is not limited in this application.

A specific application scenario example is as follows: In a frequency division duplex (frequency division duplex, FDD) communication scenario, because uplink and downlink channels do not have reciprocity, or reciprocity between uplink and downlink channels cannot be ensured, a network device usually delivers a CSI-RS to a terminal device, and the terminal device measures the received CSI-RS, to obtain CSI of the downlink channel, and feed back the CSI to the network device. The network device may determine, based on the CSI, configurations such as a resource, a modulation and coding scheme (modulation and coding scheme, MCS), and precoding for scheduling a downlink data channel of the terminal device.

For example, the CSI may include an RI, a CQI, a PMI, a layer indicator (layer indicator, LI), an RSRP, reference signal received quality (reference signal reception quality, RSRQ), a signal to noise ratio (signal to noise ratio, SNR), and a signal to interference plus noise ratio (signal to interference plus noise ratio, SINR). A specific parameter in the CSI to be fed back by the terminal device may be specifically determined based on a configuration, for example, "CSI-reporting configuration (CSI-ReportConfig)" described below.

5. Reference signal resource: The reference signal resource may be used to configure a transmission attribute of a reference signal, for example, a time-frequency resource location, a port mapping relationship, a power factor, and a scrambling code. For details, refer to related sections about the reference signal resource in the 3GPP technical specifications (technical specification, TS) 38.211 and 38.331. A transmitting end device may send a reference signal based on the reference signal resource, and a receiving end device may receive a reference signal based on the reference signal resource.

6. Reference signal configuration: The reference signal configuration may include two parts: a reference signal resource configuration and a reference signal reporting configuration. The following uses a CSI-RS configuration as an example for description.

Two important parts of the CSI-RS configuration are "CSI-reporting configuration (CSI-ReportConfig)" and "CSI-resource configuration (CSI-ResourceConfig)". "CSI-ReportConfig" and "CSI-ResourceConfig" are merely names used for ease of description, and may also be named by using other names. This is not limited in this application.

"CSI-ReportConfig" may be used to configure a parameter related to CSI reporting, for example, a "reporting configuration identifier (ReportConfigId)", a "reporting configuration type (reportConfigType)", and a "reporting quantity (reportQuantity)". "reportConfigId" may be used to mark "CSI-ReportConfig", that is, one "reportConfigId" may correspond to one "CSI-ReportConfig". "reportConfigType" is used to configure a reporting type, which may specifically include periodic reporting, semi-persistent reporting, and non-periodic reporting. "reportQuantity" may be used to configure reported information, which may include, for example, a CRI, a PMI, an RI, an LI, a CQI, an RSRP, RSRQ, an SNR, and an SINR. Different information may be reported through different configurations.

"CSI-ResourceConfig" may be used to configure information related to a CSI-RS resource, for example, a "CSI resource configuration identifier (CSI-ResourceConfigId)", and a CSI-RS resource used for measurement.

"CSI-ResourceConfigId" is an identifier of "CSI resource configuration (CSI-ResourceConfig)", which is used to mark "CSI-ResourceConfig", and may be associated with "CSI-ReportConfig" by using the variable. The CSI-RS resource used for measurement in this application is mainly a non-zero power (non-zero power, NZP) CSI-RS resource (NZP CSI-RS resource).

For example, one or more NZP CSI-RS resource sets may be configured for each terminal device by using higher layer parameters "NZP-CSI-RS-Resource", "CSI-ResourceConfig", and "NZP-CSI-RS resource set (NZP-CSI-RS-ResourceSet)", and each NZP CSI-RS resource set includes one or more NZP CSI-RS resources. Each NZP CSI-RS resource may be identified by one "NZP-CSI-RS resource identifier (nzp-CSI-RS-ResourceId)".

Table 1 shows a format of some fields in the information reported in the measurement.

Table 1

| Field (field) | Bit length (bitwidth) |
|---|---|
| CRI | $\left\lceil \log_2\left(K_s^{CSI-RS}\right) \right\rceil$ |
| SSBRI | $\left\lceil \log_2\left(K_s^{SSB}\right) \right\rceil$ |
| RSRP | 7 |
| Differential (Differential) RSRP | 4 |

As shown in Table 1, the CRI field is used to carry the CRI, and indicates an identifier of a to-be-reported CSI-RS resource, and a length of the CRI field is $\left\lceil \log_2\left(K_s^{CSI-RS}\right) \right\rceil$. $K_s^{CSI-RS}$ indicates a quantity of CSI-RS resources in a resource set s, that is, a quantity of resources in NZP-CSI-RS-ResourceSet. The SSB resource indicator (SSB resource indicator, SSBRI) field is used to carry an SSBRI, and indicates an identifier of a to-be-reported SSB resource, and a length of the SSBRI field is $\left\lceil \log_2\left(K_s^{SSB}\right) \right\rceil$. $K_s^{SSB}$ indicates a quantity of SSB resources in the resource set s. A terminal device may report one or more of the CRI or the SSBRI.

The RSRP may be reported in a differential manner. An absolute value of a maximum value of the RSRP may be reported in a 7-bit quantization manner, as shown in the RSRP field in the table. The RSRP indicated by the field corresponds to a reference signal resource corresponding to a reference signal with a maximum received power. A differential value between other RSRP and the maximum value of the RSRP may be reported in a 4-bit quantization manner, as shown in the differential RSRP field in the table.

The foregoing briefly describes a measurement result by using the reporting quantities such as the PMI, the CRI, the SSBRI, and the RSRP as an example. However, this should not constitute any limitation on this application. Specific content included in the measurement result and an indication manner of the measurement result are not limited in this application.

In embodiments of this application, the CSI may be carried in uplink control information (uplink control information, UCI), and transmitted through a physical uplink control channel (physical uplink control channel, PUCCH) or a physical uplink shared channel (physical uplink shared channel, PUSCH).

7. Component carrier (component carrier, CC): The CC is a frequency domain resource or a carrier, and corresponds to a serving cell. A network device may schedule one or more CCs for a terminal device. In this application, sending or receiving a reference signal on a CC is sending or receiving the reference signal on a frequency band corresponding to the CC.

When analog beamforming or hybrid beamforming is used, the network device can only schedule beams in a time division manner. The following describes a possible scenario in detail with reference to FIG. 4. FIG. 4 is a diagram of sending a reference signal by a network device. As an example, the reference signal shown in FIG. 4 is a CSI-RS.

As shown in FIG. 4, different beams serve different terminal devices, that is, different terminal devices correspond to different target beams. For example, a target beam corresponding to a terminal device 0 is a beam 0, a target beam corresponding to a terminal device 1 is a beam 1, and a target beam corresponding to a terminal device 2 is a beam 2. The target beam may be a beam with its signal quality higher than a specified threshold among a plurality of beams, for example, a beam with strongest signal quality. In this case, the terminal device reports only channel information of the beam 0. The terminal device 1 reports only channel information of the beam 1, and the terminal device 2 reports only channel information of the beam 2. In this way, when the network device schedules a beam (for example, the beam 2), because the terminal device 1 does not report the channel information of the beam 2, the network device cannot obtain a channel state between the terminal device 1 and the network device for the beam 2. Therefore, the network device cannot schedule resources for both the terminal device 1 and the terminal device 2, resulting in poor overall network performance.

Therefore, this application provides a measurement reporting method. After receiving a plurality of reference signals, a first communication apparatus may measure the plurality of reference signals, to obtain a plurality of groups of channel information and report the plurality of groups of channel information to a second communication apparatus. Compared with one group of reported channel information, the channel information that can be obtained by the second communication apparatus is more comprehensive, thereby facilitating resource scheduling and improving overall network performance. In addition, the plurality of groups of reported channel information may include a first type of channel information to be reported as indicated by the second communication apparatus or as determined according to a first preset rule. In this way, required channel information can be reported based on a requirement, thereby facilitating resource scheduling by the second communication apparatus side and improving network performance.

The following describes in detail the measurement reporting method provided in this application with reference to the accompanying drawings. In the following embodiments, an example in which the first communication apparatus is a terminal device and the second communication apparatus is a network device is used. However, this should not constitute any limitation on embodiments of this application. For example, the first communication apparatus may alternatively be a network device, and the second communication apparatus may alternatively be a terminal device.

FIG. 5 is a schematic flowchart of a measurement reporting method 500 according to an embodiment of this application. The method is merely described by using interaction between the network device and the terminal device as an example in FIG. 5, but this should not constitute any limitation on this application. The network device in FIG. 5 may be replaced with a component (such as a chip, a chip system, or a processor) configured in the network device, or a logical module or software that can implement all or some functions of the network device. The terminal device may be replaced with a component (such as a chip, a chip system, or a processor) configured in the terminal device, or a logical module or software that can implement all or some functions of the terminal device.

The method 500 shown in FIG. 5 includes step 505 to step 530. The following describes the steps in the method 500 in detail.

In step 510, the network device sends a plurality of reference signals to the terminal device. Correspondingly, the terminal device receives the plurality of reference signals.

Types of the plurality of reference signals may be, for example, a CSI-RS, or may be an SSB, a PDCCH-DMRS, a PDSCH-DMRS, a PTRS, a CRS in LTE, a TRS in NR, or a downlink positioning signal. A type of the reference signal is not limited in this application.

In a possible implementation, the plurality of reference signals may be sent in a time division manner. To be specific, the plurality of reference signals are sent on different time domain resources (slots or orthogonal frequency division multiplexing (orthogonal frequency division multiplexing, OFDM) symbols), and different reference signals correspond to different port groups (or correspond to different reference signal resource groups).

In another possible implementation, the plurality of reference signals may be sent in a frequency division manner. To be specific, the plurality of reference signals are sent on different frequency domain resources (that is, component carriers, resource blocks, or different subcarriers), and different reference signals correspond to different port groups (or correspond to different reference signal resource groups).

For example, in the access network device shown in FIG. 2, a specific implementation of step 510 may be as follows: The DU corresponding to the network device sends the plurality of reference signals through the RU. In the O-RAN system, a specific implementation of step 510 may be as follows: The O-DU corresponding to the network device sends the plurality of reference signals through the O-RU.

Optionally, before step 510, the method 500 further includes step 505: The network device sends reference signal configuration information to the terminal device. Correspondingly, the terminal device receives the reference signal configuration information from the network device.

As described above, the reference signal configuration may include two parts: a reference signal resource configuration and a reference signal reporting configuration. In other words, the reference signal configuration information may be used to configure a reference signal resource and reference signal measurement (or channel information measurement and reporting). For example, in downlink channel measurement, the reference signal resource may include an NZP-CSI-RS resource, and reference signal reporting may include CSI reporting. A possible form of the reference signal resource configuration is the configuration information for the NZP-CSI-RS resource as described above. For details on the NZP-CSI-RS resource and CSI reporting, refer to the related descriptions in the foregoing term descriptions. Details are not described again.

In this embodiment of this application, the reference signal resource configuration may include a configuration of reference signal port groups (which may be referred to as port groups for short), a configuration of CCs, and the like. The configuration of port groups may include an indication of a quantity of port groups, and an indication of port numbers and/or a quantity of ports included in each port group. For example, if the quantity of port groups is K, a quantity of CCs is C, and both K and C are positive integers, then a quantity of ports in the $k^{th}$ port group on the $e^{th}$ CC may be $P_{CSI\text{-}RS,k}(_c)$, where $k=$ 0, 1, ..., K-1, c = 0, 1, ..., C-1, and $P_{CSI\text{-}RS,k}(_c)$ is a positive integer.

In a possible case, the quantity of ports in the same port group is the same across different CCs, for example, all $P_{CSI\text{-}RS,k}$, that is, $P_{CSI\text{-}RS,k}(_c) = P_{CSI\text{-}RS,k}$, where $P_{CSI\text{-}RS,k}$ is a positive integer.

In another possible case, the quantity of ports is the same across different port groups, for example, all $P_{CSI\text{-}RS}$, that is, $P_{CSI\text{-}RS,k} = P_{CSI\text{-}RS}$, where $P_{CSI\text{-}RS,k}$ is a positive integer.

In yet another possible case, the quantity of ports is the same across different port groups and different CCs, for example, all $P_{CSI\text{-}RS}$, that is, $P_{CSI\text{-}RS,k}(_c) = P_{CSI\text{-}RS}$.

In this embodiment of this application, a port group may include a plurality of ports. Each reference signal may be sent through one port group. Therefore, each reference signal may be considered to correspond to a port group. Each port group corresponds to a sending manner or sending mode. The sending manner represents digital weighting and/or analog weighting, that is, different sending manners correspond to different digital weights, different analog weights, or different combinations of digital weights and analog weights. Since a plurality of reference signals transmitted by using a plurality of reference signal resources in a reference signal resource group correspond to the same port group, those reference signals correspond to the same sending manner or sending mode.

Because a plurality of ports in a port group correspond to a single sending manner or sending mode, the spatial energy of the sent reference signals is concentrated in a specific direction. Therefore, a reference signal sent by the network device by using a port group may also be considered as a beam.

In the foregoing configuration, the network device configures K port groups. Therefore, the network device may send reference signals in different directions by using the K port groups. A reference signal sent by using a port group may be understood as a reference signal sent through a beam. Different beams may be sent through different port groups, or may be sent through the same port group using different digital weights and/or analog weights. This is not limited in this application.

For example, the reference signal configuration information may be carried in an RRC message. For example, if the reference signal is a CSI-RS, the reference signal resource configuration in the reference signal configuration information may be configured by using a parameter carried in an information element "CSI-ResourceConfig" in the RRC message; and the reference signal reporting configuration may be configured by using a parameter carried in an information element "CSI-ReportConfig" in the RRC message.

In step 520, the plurality of reference signals are measured to obtain a plurality of groups of channel information.

In this application, the channel information may also be referred to as a channel response. A name of the channel information is not specifically limited in this application. For example, CSI is a type of channel information, which is information that can reflect a channel feature or channel quality.

For example, the channel information may include, for example, but is not limited to, one or more parameters of the CRI, the CQI, the PMI, the RI, the LI, the RSRP, the RSRQ, the SNR, and the SINR. This is not limited in this application.

In an example, in type II (type II) codebook feedback, a to-be-fed-back precoding matrix corresponding to one transport layer and one subband may be represented as $\mathbf{W}$: $\mathbf{W} = \mathbf{W}_1\mathbf{W}_2$. A dimension of $\mathbf{W}$ is $P_{CSI\text{-}RS} \times N_3$. $\mathbf{W}_1$ is a wideband precoding matrix, and a dimension of $\mathbf{W}_1$ is $P_{CSI\text{-}RS} \times 2L$. $\mathbf{W}_1$ is a subband precoding matrix, and a dimension of $\mathbf{W}_1$ is $2L \times N_3$. $P_{CSI\text{-}RS}$ represents a quantity of CSI-RS ports, $N_3$ represents a quantity of subbands or a quantity of PMIs, and 2L represents a quantity of discrete Fourier transform (discrete Fourier transformation, DFT) beams (or a quantity of ports) fed back by the terminal device. The PMI may specifically include feedback on precoding matrices of different transport layers and different subbands.

In another example, in type II codebook feedback, a to-be-fed-back precoding matrix corresponding to one transport layer may alternatively be represented as W: $\mathbf{W} = \mathbf{W}_1\tilde{\mathbf{W}}_2\mathbf{W}_f^H$. A dimension of $\mathbf{W}$ is $P_{CSI\text{-}RS} \times N_3$. $\mathbf{W}_1$ is a wideband precoding matrix, and a dimension of $\mathbf{W}_1$ is $P_{CSI\text{-}RS} \times 2L$. A dimension of $\tilde{\mathbf{W}}_2\mathbf{W}_f^H$ is $2L \times M$, a dimension of $\tilde{\mathbf{W}}_2$ is $2L \times M$, and a dimension of $\mathbf{W}_f^H$ is $M \times N_3$. $\mathbf{W}_f^H$ is a matrix formed by M row vectors in an inverse discrete Fourier transform (inverse discrete Fourier transform, IDFT) matrix (or an IDFT base) whose dimension is $N_3 \times N_3$, or is a conjugate transposition of a matrix formed by M column vectors in a DFT matrix whose dimension is $N_3 \times N_3$. M represents a quantity of base vectors selected from the IDFT matrix. For descriptions of other parameters such as $P_{CSI\text{-}RS}$, $N_3$, and 2L, refer to the foregoing descriptions. Details are not described again. The PMI may specifically include feedback on precoding matrices of different transport layers. For details about the type II codebook feedback, refer to a related chapter in 3GPP TS 38.214. Details are not described herein.

It should be understood that the plurality of groups of channel information is channel information reported by the terminal device, and the terminal device may obtain more groups of channel information by measuring the plurality of reference signals. In other words, the terminal device may obtain one or more groups of channel information by measuring the plurality of reference signals, and the terminal device may report at least one of the one or more groups of channel information. The at least one group of channel information may include a first type of channel information and/or a second type of channel information.

In step 530, the terminal device sends the plurality of groups of channel information to the network device. Correspondingly, the network device receives the plurality of groups of channel information.

For example, in the access network device shown in FIG. 2, a specific implementation of receiving the plurality of groups of channel information by the network device may be as follows: The RU corresponding to the network device receives the plurality of groups of channel information, and the DU processes the plurality of groups of channel information. In the O-RAN system, a specific implementation of receiving the plurality of groups of channel information by the network device may be as follows: The O-RU corresponding to the network device receives the plurality of groups of channel information, and the O-DU processes the plurality of groups of channel information.

The plurality of groups of channel information include a first type of channel information and/or a second type of channel information, the first type of channel information is to be reported as indicated by the network device or as determined by the terminal device according to a first preset rule, and the second type of channel information is to be reported as determined according to a second preset rule.

The plurality of groups of channel information include the first type of channel information and/or the second type of channel information. In a possible design, the plurality of groups of channel information may be the first type of channel information. In another possible design, the plurality of groups of channel information may be the second type of channel information. In still another possible design, a part of the plurality of groups of channel information is the first type of channel information, and the other part of channel information is the second type of channel information. The first type of channel information may include one or more groups, and the second type of channel information may include one or more groups. A quantity of pieces of the first type of channel information and a quantity of pieces of the second type of channel information is not limited in this application.

Each group of channel information may correspond to one beam (or port group or reference signal). For example, one reference signal may correspond to one group of channel information. For example, the terminal device may measure the one reference signal to obtain the one group of channel information. In addition, two or more reference signals may also correspond to one group of channel information. For example, the terminal device may measure the two reference signals to obtain the one group of channel information. This is not limited in this application.

It should be understood that, in actual application, the terminal device may alternatively receive the plurality of reference signals from the network device, measure the plurality of reference signals to obtain one group of channel information, and report the group of channel information to the network device. The group of channel information may be the first type of channel information or the second type of channel information.

The following describes in detail the foregoing two possible designs of the first type of channel information.

1. The first type of channel information is to be reported as indicated by the network device.

In a possible implementation, the first type of channel information is channel information corresponding to one or more group indexes indicated by the network device, and each of the plurality of groups of channel information corresponds to a group index. In other words, the network device indicates the one or more group indexes to the terminal device, and the terminal device reports the channel information corresponding to the one or more group indexes.

For example, the group index corresponding to the channel information that needs to be reported may be carried in the reference signal reporting configuration. For example, the network device may indicate, by using the reference signal reporting configuration, a quantity M of groups of measured channel information, a quantity P of groups of reported channel information, and a PMI configuration corresponding to each group of channel information. P may be a positive integer less than or equal to M. In other words, the P groups of reported channel information is from the M groups of measured channel information. Correspondingly, the terminal device may measure a corresponding reference signal based on an indication of the network device, to obtain channel information corresponding to an indicated group index, and report the channel information to the network device.

Optionally, M is a positive integer equal to K, that is, M=K, or M is a positive integer greater than K, that is, M>K.

In a possible case, M=K. The network device sends K reference signals by using the K port groups. The terminal device may measure each received reference signal to obtain one group of measurement results, and measure the K reference signals to obtain K groups of measurement results. Each of the K groups of measurement results may correspond to one port group (or reference signal or beam).

In another possible case, M>K. The network device sends K reference signals by using the K port groups. The terminal may measure each received reference signal to obtain one group of measurement results, and measure the K reference signals to obtain K groups of measurement results. The terminal device may further encrypt the K groups of measurement results to obtain more groups (that is, M groups) of measurement results.

Channel information is used as an example. The channel information obtained by measuring the K reference signals is $\mathbf{A_0}$, $\mathbf{A_1}$, ..., and $\mathbf{A_{K-1}}$, where a dimension of $\mathbf{A}_k$ is $N_{RX} \times N_{TX}$, $N_{RX}$ represents a quantity of receive antenna ports of the terminal, and $N_{TX}$ represents a quantity of transmit antenna ports of the network device. For example, in the foregoing example of the reference signal resource configuration, $N_{TX}$ is a quantity $P_{CSI-RS}$ of CSI-RS ports. The terminal device may encrypt the K groups of channel information based on M groups of coefficients. The M groups of coefficients are respectively denoted as $\varphi_0$, $\varphi_1$, ..., and $\varphi_{M-1}$, where a $q^{th}$ group of coefficients may be represented as $\varphi_q = [\varphi_{q,0}\ \varphi_{q,1} \cdots \varphi_{q,K-1}]^T$, and a superscript T represents a transposition matrix. The M groups of coefficients may be, for example, M groups of orthogonal cover codes (orthogonal cover code, OCC). The K groups of channel information are encrypted based on the M groups of coefficients to obtain M groups of channel information, which are respectively $\mathbf{H_0}$, $\mathbf{H_1}$, ..., and $\mathbf{H_{M-1}}$, where a $q^{th}$ group of channel information $\mathbf{H}_q$ satisfies: $\mathbf{H}_q = \sum_{k=0}^{K-1} \varphi_{q,k} \mathbf{A}_k$ . The M groups of coefficients may be indicated by the network device, or may be predefined in a protocol. This is not limited in this application.

In an example, K=2, M=4, and K groups of channel coefficients corresponding to the K reference signals are $\mathbf{A_0}$ and $\mathbf{A_1}$. The M groups of coefficients are respectively $\varphi_1 = [0\ 1]^T$, $\varphi_2 = [1\ 0]^T$, $\varphi_3 = [j\ 1]^T$, and $\varphi_4 = [1\ j]^T$, where $j = \sqrt{-1}$, and is an imaginary unit. Therefore, the M groups of channel information obtained through calculation are respectively $\mathbf{H_0} = \mathbf{A_0}$, $\mathbf{H_1} = \mathbf{A_1}$, $\mathbf{H_2} = j\mathbf{A_0} + \mathbf{A_1}$, and $\mathbf{H_3} = \mathbf{A_0} + j\mathbf{A_1}$.

Based on the method provided above, the terminal device may obtain the M groups of measurement results based on the K groups of measurement results by performing similar encryption processing on a measurement result other than the channel information or in another manner, for example, interpolation.

In another possible implementation in which the first type of channel information is to be reported as indicated by the network device, the first type of channel information is obtained by measuring a reference signal carried on a target reference signal resource, and an identifier of the target reference signal resource and/or an identifier of a resource set to which the target reference signal resource belongs are/is indicated by the network device. In other words, the network device indicates, to the terminal device, the identifier of the target reference signal resource and/or the identifier of the resource set to which the target reference signal resource belongs, so that the terminal device reports the channel information obtained by measuring the reference signal carried on the target reference signal resource. The reference signal carried on the target reference signal resource is one or more reference signals (or some reference signals) in the reference signals received by the terminal device.

For example, the identifier of the target reference signal resource and/or the identifier of the resource set to which the target reference signal resource belongs may be carried in the reference signal reporting configuration.

For example, the network device may indicate an identifier of one or more reference signal resource sets by using the reference signal reporting configuration. In this case, the terminal device may report channel information obtained by measuring a reference signal on a reference signal resource in the resource set. For example, resource sets configured by the network device include a resource set 1 and a resource set 2. The resource set 1 includes a reference signal resource 1 to a reference signal resource 3, and the resource set 2 includes a reference signal resource 4 to a reference signal resource 6. The network device may indicate an identifier of the resource set 1 by using the reference signal reporting configuration. In this way, the terminal device may report channel information obtained by measuring reference signals on the reference signal resource 1 to the reference signal resource 3.

For another example, the network device may indicate an identifier of a reference signal resource set and an identifier of a reference signal resource (or indicate only the identifier of the reference signal resource) by using the reference signal reporting configuration. For example, resource sets configured by the network device include a resource set 1 and a resource set 2. The resource set 1 includes a reference signal resource 1 to a reference signal resource 3, and the resource set 2 includes a reference signal resource 4 to a reference signal resource 6. The network device may indicate an identifier of the resource set 1 and an identifier of the reference signal resource 2 (or indicate only the identifier of the reference signal resource 2) by using the reference signal reporting configuration. In this way, the terminal device may report channel information obtained by measuring a reference signal on the reference signal resource 2 in the reference signal resource set 1.

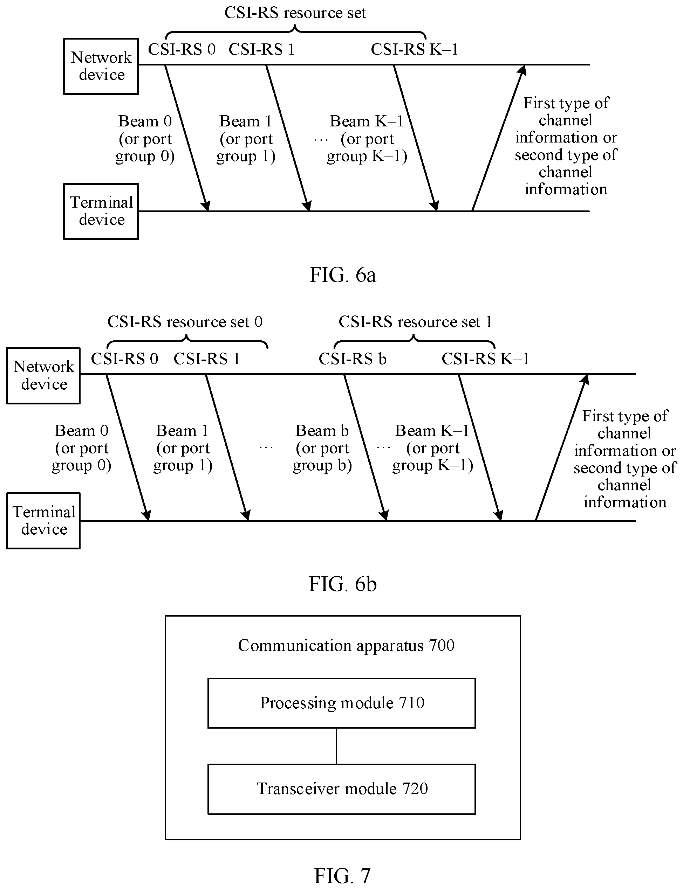

FIG. 6a and FIG. 6b are diagrams of different quantities of configured reference signal resource sets according to an embodiment of this application.

In a possible case, resources corresponding to the plurality of reference signals belong to a same resource set, and the network device may indicate the identifier of the target reference signal resource to the terminal device. As shown in FIG. 6a, the network device configures a CSI-RS resource set for the terminal device. The resource set includes a resource corresponding to a CSI-RS 1, a resource corresponding to a CSI-RS 2, ..., and a resource corresponding to a CSI-RS K-1. The network device may send each CSI-RS by using a beam (or a port group) corresponding to each CSI-RS.

After receiving each CSI-RS, the terminal device measures the CSI-RS to obtain M groups of channel information, and reports P groups of channel information to the network device, where P is less than or equal to M, and the P groups of channel information may include a first type of channel information and a second type of channel information, or the P groups of channel information may include one of a first type of channel information and a second type of channel information. This is not limited in this application.

In another possible case, resources corresponding to the plurality of reference signals are divided into at least two resource sets, and the network device may indicate the identifier of the target reference signal resource to the terminal device, or may indicate the identifier of the target reference signal resource and the identifier of the resource set to which the target reference signal resource belongs to the terminal device. As shown in FIG. 6b, the network device configures S CSI-RS resource sets for the terminal device (a CSI-RS resource set 0 and a CSI-RS resource set 1 are used as an example in the figure), including K reference signals in total. The network device may indicate the identifier of the target reference signal resource to the terminal device, or may indicate the identifier of the target reference signal resource and the identifier of the resource set to which the target reference signal resource belongs to the terminal device. The network device may send each CSI-RS by using a beam (or a port group) corresponding to each CSI-RS. After receiving each CSI-RS, the terminal device measures the CSI-RS to obtain M groups of channel information, and reports P groups of channel information to the network device, where P is less than or equal to M, and the P groups of channel information may include a first type of channel information and a second type of channel information, or the P groups of channel information may include one of a first type of channel information and a second type of channel information. This is not limited in this application.

2. The first type of channel information is to be reported as determined by the terminal device according to a first preset rule.

The first type of channel information is obtained by measuring the reference signal carried on the target reference signal resource, the target reference signal resource is determined according to the first preset rule, and the first preset rule may be, for example, configured by the network device, or may be predefined. This is not limited in this application. The first preset rule includes any one of the following: the target reference signal resource is an $m^{th}$ reference signal resource to an $n^{th}$ reference signal resource in at least one reference signal resource set, m and n are integers, and $n \geq m$; the target reference signal resource is a reference signal resource corresponding to a resource used for reporting CSI; the target reference signal resource is a resource corresponding to a reference signal with a highest priority among the plurality of reference signals, and a priority of each of the plurality of reference signals is indicated by the network device; or the target reference signal resource is a resource corresponding to a reference signal with a highest RSRP (or a highest CQI, or a highest SINR, or a highest SNR) among the plurality of reference signals. The following describes the foregoing preset rules in detail one by one.

Rule 1: The target reference signal resource is the $m^{th}$ reference signal resource to the $n^{th}$ reference signal resource in the at least one reference signal resource set, m and n are integers, and $n \geq m$.

Herein, m and n may be indicated by the network device, or may be predefined. This is not limited in this application. In addition, each of the at least one reference signal resource set includes resources corresponding to one or more of the plurality of reference signals. In other words, the resources corresponding to the one or more reference signals may be divided into one or more resource sets, and the target reference signal resource may be an $m^{th}$ reference signal resource to an $n^{th}$ reference signal resource in at least one of the one or more resource sets.

When m=n, the target reference signal resource is the $m^{th}$ reference signal resource to the $n^{th}$ reference signal resource in the at least one reference signal resource set, which may be understood as that the target reference signal resource is the $m^{th}$ (or $n^{th}$) reference signal resource in each of the at least one reference signal resource set. For example, the target reference signal resource is the $1^{st}$ reference signal resource in each of the at least one reference signal resource set. For another example, the target reference signal resource is the last reference signal resource in each of the at least one reference signal resource set.

When n>m, the target reference signal resource is the $m^{th}$ reference signal resource to the $n^{th}$ reference signal resource in the at least one reference signal resource set, which may be understood as that the target reference resource includes (n-m+1) reference signal resources in each of the at least one reference signal resource set. For example, resources corresponding to the plurality of reference signals are divided into two reference signal resource sets, each reference signal resource set includes five reference signal resources, and the target reference signal resource may be the $1^{st}$ reference signal resource to the $3^{rd}$ reference signal resource in each of the two reference signal resource sets.

Rule 2: The target reference signal resource is the reference signal resource corresponding to the resource used for reporting the CSI.

The network device may indicate, to the terminal device, one or more reference signal resources in the resource used for reporting the CSI, and the terminal device measures a reference signal on the one or more reference signal resources, to obtain channel information and report the channel information. For example, the network device may indicate, in the reference signal reporting configuration, the one or more reference signal resources in the resources used to report the CSI. For example, a CRI index and a PUCCH resource used for reporting the CSI are configured in the reporting configuration, and the PUCCH resource is associated with the CRI. For a specific signaling example, refer to a field "CRIandPUCCH-CSI-Resource" in Table 2.

Table 2

CSI-ReportConfig ::=                SEQUENCE { (CSI reporting configuration)

    reportConfigId (identifier of the reporting configuration)        CSI-ReportConfigId,,

    ...,

    CRIandPUCCH-CSI-Resource ::=            SEQUENCE {(reported PUCCH resource corresponding to the CRI)

    criId            INTEGER (0..N−1), (index of the CRI, where the index is in one-to-one correspondence with a CSI-RS resource in the reporting configuration, and N is a quantity of resources that can be configured in the reporting configuration)

    pucch-CSI-ResourceList            SEQUENCE (SIZE (1..K)) OF PUCCH-CSI-Resource (PUCCH resource configuration, where K herein is a quantity of PUCCH resources, for example, K=1;)

    }

    }

    PUCCH-CSI-Resource ::= SEQUENCE {(PUCCH resource)

    uplinkBandwidthPartId BWP-Id,    (index of a bandwidth part in which the PUCCH resource is located)

    pucch-Resource PUCCH-ResourceId (index of the PUCCH resource)

    }

Rule 3: The target reference signal resource is the resource corresponding to the reference signal with the highest priority among the plurality of reference signals, and the priority of each of the plurality of reference signals is indicated by the network device.

The network device may indicate, to the terminal device, the priority corresponding to each of the plurality of reference signals. The target reference signal resource is the resource corresponding to the reference signal with the highest priority among the plurality of reference signals. In other words, the terminal device may report channel information obtained by measuring the reference signal with the highest priority among the plurality of reference signals.

In a possible design, the network device may define the priority of each of the plurality of reference signals based on a resource index, a service requirement, historical data, or the like. The historical data may be, for example, historical statistical data based on channel information of each reference signal of a user.

It should be understood that, that the target reference signal resource is the resource corresponding to the reference signal with the highest priority among the plurality of reference signals is merely an example, and should not constitute any limitation on this application. For example, in actual application, the target reference signal resource may be a resource corresponding to a reference signal with its priority greater than or equal to a priority threshold among the plurality of reference signals.

Rule 4: The target reference signal resource is the resource corresponding to the reference signal with the highest RSRP among the plurality of reference signals.

The terminal device measures the plurality of reference signals to obtain a measurement result, so as to report channel information obtained by measuring the reference signal with a highest RSRP among the plurality of reference signals.

It should be understood that, that the target reference signal resource is the resource corresponding to the reference signal with the highest RSRP among the plurality of reference signals is also merely an example. For example, the target reference signal resource may be a resource corresponding to a reference signal with its RSRP greater than or equal to an RSRP threshold among the plurality of reference signals.

It should be further understood that the RSRP may be replaced with another parameter such as a CQI, an SINR, or an SNR. In other words, the target reference signal resource may be a resource corresponding to a reference signal with its CQI greater than or equal to a CQI threshold among the plurality of reference signals. This is not limited in this application.

It should be noted that the foregoing rules may be used separately or together. When the plurality of rules are separately used, the terminal device may report channel information that meets a rule. When at least two of the plurality of rules are used together, the terminal device may report channel information that meets the at least two rules. For example, if the rule 1 and the rule 3 are used together, the terminal device may determine the $m^{th}$ reference signal resource to the $n^{th}$ reference signal resource in the at least one reference signal resource set, and then select, from the $m^{th}$ reference signal resource to the $n^{th}$ reference signal resource, channel information of a reference signal with a highest priority in corresponding reference signals for reporting.

The first type of channel information is described in detail above, and the second type of channel information is described below.

The terminal device may further report the channel information obtained by measuring the target reference signal determined according to the second preset rule. The second type of channel information may include one or more groups. A quantity of groups of the second type of channel information is not limited in this application. Each group of channel information may correspond to one port group (or beam or reference signal).

The second type of channel information is channel information obtained by measuring a target reference signal determined according to the second preset rule. The second preset rule includes one or more of the following: the target reference signal is a reference signal with a highest RSRP among the plurality of reference signals; the target reference signal is a reference signal for which a difference between its RSRP and a previously reported RSRP is less than or equal to a first threshold among the plurality of reference signals; the target reference signal is a reference signal among the plurality of reference signals other than a reference signal corresponding to the first type of channel information; or the target reference signal is a reference signal having a correlation with a reference signal corresponding to the first type of channel information that is greater than or equal to a second threshold. The following describes the foregoing rules in detail.

Rule a: The target reference signal is the reference signal with the highest RSRP among the plurality of reference signals.

In other words, the second type of channel information is channel information obtained by measuring the reference signal with the highest RSRP among the plurality of reference signals. As described above, the first type of channel information may also be channel information to be reported as determined according to this rule. In this case, the determined first type of channel information is the same as the determined second type of channel information. In this case, the terminal device may report only the first type of channel information (or report only the second type of channel information).

That the target reference signal is the reference signal with the highest RSRP among the plurality of reference signals is merely an example, and should not constitute any limitation on this application. For example, in actual application, the target reference signal may be a reference signal with its RSRP greater than or equal to an RSRP threshold among the plurality of reference signals.

Rule b: The target reference signal is the reference signal for which a difference between its RSRP and the previously reported RSRP is less than or equal to the first threshold among the plurality of reference signals.

The first threshold may be predefined, or may be indicated by the network device. This is not limited in this application.

For example, each reference signal corresponds to an RSRP, and the terminal device may report channel information obtained by measuring the reference signal for which a difference between its RSRP and the previously reported RSRP is less than or equal to the first threshold among the plurality of reference signals. For example, if the plurality of reference signals include a reference signal 1 to a reference signal 10, and differences between RSRPs corresponding to the reference signal 1, the reference signal 2, and the reference signal 5 and the previously reported RSRP are less than or equal to the first threshold, the terminal device may report channel information (the second type of channel information) obtained by measuring the reference signal 1, the reference signal 2, and the reference signal 5.

Rule c: The target reference signal is the reference signal other than the reference signal corresponding to the first type of channel information among the plurality of reference signals.

The reference signal corresponding to the first type of channel information may be understood as at least one reference signal used to obtain the first type of channel information through measurement. In other words, channel information obtained by measuring the at least one reference signal is denoted as the first type of channel information.

The target reference signal is the reference signal other than the reference signal corresponding to the first type of channel information among the plurality of reference signals, which may be understood as that a target reference signal corresponding to the second type of channel information is any one or more reference signals among the plurality of reference signals other than the reference signal corresponding to the first type of channel information. For example, if the plurality of reference signals include a reference signal 1 to a reference signal 10, and the first type of channel information is channel information obtained by measuring the reference signal 1 and the reference signal 2, the second type of channel information may be channel information obtained by measuring any one or more of the reference signal 3 to the reference signal 10. For example, the second type of channel information may be channel information corresponding to a reference signal with a highest RSRP in the reference signal 3 to the reference signal 10. For another example, the second type of channel information may be channel information corresponding to a reference signal for which a difference between its RSRP and the previously reported RSRP is less than or equal to the first threshold in the reference signal 3 to the reference signal 10. For still another example, the second type of channel information may be channel information corresponding to a reference signal randomly selected from the reference signal 3 to the reference signal 10.

It may be understood, if the reference signal corresponding to the second type of channel information is the same as the reference signal corresponding to the first type of channel signal, the channel information corresponding to the same reference signal is reported only once. For example, reference signals corresponding to the first type of channel information include a reference signal 1, a reference signal 2, a reference signal 3, and a reference signal 4. If reference signals corresponding to the second type of channel information determined according to the second preset rule are the reference signal 1, the reference signal 2, and a reference signal 5, only channel information corresponding to the reference signal 5 is reported in the second type of channel information.

Rule d: The target reference signal is the reference signal having a correlation with the reference signal corresponding to the first type of channel information that is greater than or equal to the second threshold.

The second threshold may be predefined, or may be indicated by the network device. This is not limited in this application.

The terminal device may determine, from reference signals other than the reference signal corresponding to the first type of channel information, the reference signal having a correlation with the reference signal corresponding to the first type of channel information that is greater than or equal to the second threshold, and report a measurement result corresponding to the reference signal. For example, the plurality of reference signals include a reference channel 1 to a reference signal 10, and the first type of channel information is channel information corresponding to the reference signal 1. The terminal device may determine a correlation between each of the reference signal 2 to the reference signal 10 and the reference signal 1, and select channel information corresponding to a reference signal having a correlation that is greater than or equal to the second threshold as the second type of channel information for reporting.

It may be understood that, if the first type of channel information corresponds to the reference signal 1 and the reference signal 2, the terminal device may select any one of the reference signals (for example, the reference signal 1), perform correlation calculation between the reference signal 1 and a reference signal other than the reference signal 1 and the reference signal 2 among the plurality of reference signals, and select channel information corresponding to a reference signal having a correlation that is greater than or equal to the second threshold as the second type of channel information for reporting.

In the foregoing embodiment, the first type of channel information needs to be reported, and the second type of channel information is optionally reported. However, this should not constitute any limitation on this application. For example, in an implementation, the second type of channel information may need to be reported, and the first type of channel information is optionally reported. In other words, the plurality of groups of channel information reported by the terminal device need to include the second type of channel information, and the second type of channel information is determined according to the second preset rule. Optionally, the plurality of groups of channel information may further include the first type of channel information, and the first type of channel information is to be reported as indicated by the network device or as determined by the terminal device according to the first preset rule.

Optionally, some parameters in the first type of channel information and the second type of channel information may be shared. For example, when values of some parameters in the first type of channel information and the second type of channel information are the same, the terminal device may not report, in the second type of channel information, a parameter whose value is the same as that in the first type of channel information.

For example, the first type of channel information includes at least one of the following: a PMI 1, a CQI 1, an RI 1, an LI 1, and an RSRP 1; and the second type of channel information includes at least one of the following: a PMI 2, CQI 2, an RI 2, an LI 2, and an RSRP 2. When the PMI 2 is different from the PMI 1, and the CQI 1 is different from the CQI 2, the second type of channel information may not include the PMI 2, and the PMI 2 corresponding to the second channel information is the same as the PMI 1 by default. When the RI 1 is the same as the RI 2, the second type of channel information may not include the RI 2, and the RI 2 corresponding to the second channel information is the same as the RI 1 by default. When the PMI 1 is wideband, the PMI 2 is wideband (W_1)+subband (W_2 and others), and the wideband of the PMI 1 is the same as the wideband part of the PMI 2, the first type of channel information may include the wideband, and the second type of channel information may include the subband.

Similarly, in the first type of channel information, when measurement information of the plurality of reference signals needs to be reported, some parameters may be shared. A specific implementation is similar to the foregoing example.

Similarly, in the second type of channel information, when measurement information of the plurality of reference signals needs to be reported, some parameters may be shared. A specific implementation is similar to the foregoing example.

Based on the foregoing technical solution, after receiving the plurality of reference signals, the first communication apparatus may measure the plurality of reference signals, to obtain the plurality of groups of channel information and report the plurality of groups of channel information to the second communication apparatus. Compared with one group of reported channel information, the channel information that can be obtained by the second communication apparatus is more comprehensive, thereby facilitating resource scheduling and improving overall network performance. In addition, the plurality of groups of channel information reported by the first communication apparatus include the first type of channel information and/or the second type of channel information, and the first type of channel information may be reported as indicated by the second communication apparatus. In other words, the second communication apparatus may flexibly indicate, based on an actual requirement, specific channel information that the first communication apparatus is expected to report, thereby facilitating resource scheduling by the first communication apparatus and improving network performance.

It should be noted that, in embodiments of this application, steps in all accompanying drawings (for example, FIG. 5 or FIG. 6a and FIG. 6b) are merely examples, and should not constitute any limitation on embodiments of this application. For example, in actual application, an execution sequence of the steps shown in this application may be adjusted, or some steps may be added or removed. This is not limited in embodiments of this application.

FIG. 7 to FIG. 9 are diagrams of structures of possible communication apparatuses according to embodiments of this application. These communication apparatuses may be configured to implement functions of the terminal device or the network device in the foregoing method embodiments, and therefore can also achieve beneficial effects of the foregoing method embodiments. In embodiments of this application, the communication apparatus may be the terminal device or the network device in the method embodiment shown in FIG. 5, or may be a component (such as a chip, a chip system, or a processor) configured on the terminal device or the network device, or may be a logical module or software that can implement some or all functions of the terminal device or the network device.

FIG. 7 is a block diagram of a communication apparatus 700 according to an embodiment of this application.

As shown in FIG. 7, the communication apparatus 700 includes a processing module 710 and a transceiver module 720.

The transceiver module 720 may implement a corresponding communication function, and the transceiver module 720 may also be referred to as an input/output interface or a communication unit. The processing module 710 may be configured to perform a processing operation. It should be understood that, if the apparatus 700 is a component configured in a network device or a terminal device, for example, a chip, the transceiver module 720 may be an input/output interface.

Optionally, the transceiver module 720 may include a sending module and a receiving module. The sending module is configured to perform a sending operation of the network device or the terminal device in FIG. 5, and the receiving module is configured to perform a receiving operation of the network device or the terminal device in FIG. 5.

It should be understood that, when the apparatus 700 is the component configured in the network device or the terminal device, for example, the chip, the sending module may be an output interface, and a sending operation in this embodiment of this application may be performed by the output interface; and the receiving module may be an input interface, and a receiving operation in this embodiment of this application may be performed by the input interface.

Optionally, the apparatus 700 may further include a storage module. The storage module may be configured to store instructions and/or data. The processing module 710 may read the instructions and/or the data in the storage module, so that the apparatus implements the method embodiment shown in FIG. 5.

In a possible design, the apparatus 700 may be configured to implement a function of the terminal device in the method embodiment shown in FIG. 5, or the apparatus 700 may include a unit configured to implement any function or operation of the terminal device in the method embodiment shown in FIG. 5. The unit may be completely or partially implemented by software, hardware, firmware, or any combination thereof.

When the apparatus 700 is configured to implement the function of the terminal device in the method embodiment shown in FIG. 5, the transceiver module 720 (which may be specifically a receiving module) may be configured to perform step 510 in FIG. 5 to receive a plurality of reference signals from a network device; the processing module 710 may be configured to perform step 520 in FIG. 5 to measure the plurality of reference signals to obtain a plurality of groups of channel information; and the transceiver module 720 (which may be specifically a sending module) may be further configured to perform step 530 in FIG. 5 to send the plurality of groups of channel information to the network device, where the plurality of groups of channel information include a first type of channel information and/or a second type of channel information, the first type of channel information is to be reported as indicated by the network device or as determined by the terminal device according to a first preset rule, and the second type of channel information is to be reported as determined according to a second preset rule.

In another possible design, the apparatus 700 may be configured to implement a function of the network device in the method embodiment shown in FIG. 5, or the apparatus 700 may include a unit configured to implement any function or operation of the network device in the method embodiment shown in FIG. 5. The unit may be completely or partially implemented by software, hardware, firmware, or any combination thereof.

When the apparatus 700 is configured to implement the function of the network device in the method embodiment shown in FIG. 5, the transceiver module 720 (which may be specifically a sending module) may be configured to perform step 510 in FIG. 5 to send a plurality of reference signals to a terminal device; and the transceiver module 720 (which may be specifically a receiving module) may be configured to perform step 530 in FIG. 5 to receive a plurality of groups of channel information from the terminal device, where the plurality of groups of channel information include a first type of channel information and/or a second type of channel information, the first type of channel information is to be reported as indicated by the network device or as determined by the terminal device according to a first preset rule, and the second type of channel information is to be reported as determined according to a second preset rule.

Optionally, the first type of channel information is channel information corresponding to one or more group indexes indicated by the second communication apparatus, and each of the plurality of groups of channel information corresponds to a group index.

Optionally, the first type of channel information is obtained by measuring a reference signal carried on a target reference signal resource, and an identifier of the target reference signal resource and/or an identifier of a resource set to which the target reference signal resource belongs are/is indicated by the second communication apparatus.

Optionally, the first type of channel information is obtained by measuring the reference signal carried on the target reference signal resource, the target reference signal resource is determined according to the first preset rule, and the first preset rule includes any one of the following: the target reference signal resource is an $m^{th}$ reference signal resource to an $n^{th}$ reference signal resource in at least one reference signal resource set, m and n are integers, and $n \geq m$; the target reference signal resource is a reference signal resource corresponding to a resource used for reporting CSI (or referred to as a CSI reporting resource); the target reference signal resource is a resource corresponding to a reference signal with a highest priority among the plurality of reference signals, and a priority of each of the plurality of reference signals is indicated by the second communication apparatus; or the target reference signal resource is a resource corresponding to a reference signal with a highest RSRP among the plurality of reference signals.

Optionally, the second type of channel information is channel information obtained by measuring a target reference signal determined according to the second preset rule, and the second preset rule includes one or more of the following: the target reference signal is a reference signal with a highest RSRP among the plurality of reference signals; the target reference signal is a reference signal for which a difference between its RSRP and a previously reported RSRP is less than or equal to a first threshold among the plurality of reference signals; the target reference signal is a reference signal among the plurality of reference signals other than a reference signal corresponding to the first type of channel information; or the target reference signal is a reference signal having a correlation with a reference signal corresponding to the first type of channel information that is greater than or equal to a second threshold.

Optionally, each group of channel information includes a PMI, a CQI, an RI, and a CRI.

For more detailed descriptions of the processing module 710 and the transceiver module 720, directly refer to the related descriptions in the method embodiment shown in FIG. 5. Details are not described herein again.

It should be noted that the transceiver module may also be referred to as a transceiver unit, a transceiver, a transceiver machine, a transceiver apparatus, or the like. The processing module may also be referred to as a processor, a processing board, a processing unit, a processing apparatus, or the like. Optionally, the transceiver module is configured to perform a sending operation and a receiving operation of the terminal device side or the network device side in the foregoing method. A component configured to implement a receiving function in the communication module may be considered as a receiving module, and a component configured to implement a sending function in the communication module may be considered as a sending module. In other words, the transceiver module includes the receiving module and the sending module.

In addition, in a possible design, the transceiver module and/or the processing module may be implemented by a virtual module. For example, the processing module may be implemented by a software function module or a virtual apparatus, and the transceiver module may be implemented by a software function module or a virtual apparatus. In another possible design, the processing module or the transceiver module may alternatively be implemented by a physical apparatus. For example, if the apparatus is implemented by a chip/chip circuit, the transceiver module may be an input/output circuit and/or a communication interface, and performs an input operation (corresponding to the receiving operation) and an output operation (corresponding to the sending operation). The processing module is an integrated processor, a microprocessor, or an integrated circuit.

It should be understood that division into modules in embodiments of this application is an example, and is merely logical function division. In actual implementation, there may be another division manner. In addition, functional modules in embodiments of this application may be integrated into one processor, or may exist alone physically, or two or more modules may be integrated into one module. The integrated module may be implemented in a form of hardware, or may be implemented in a form of a software functional module.

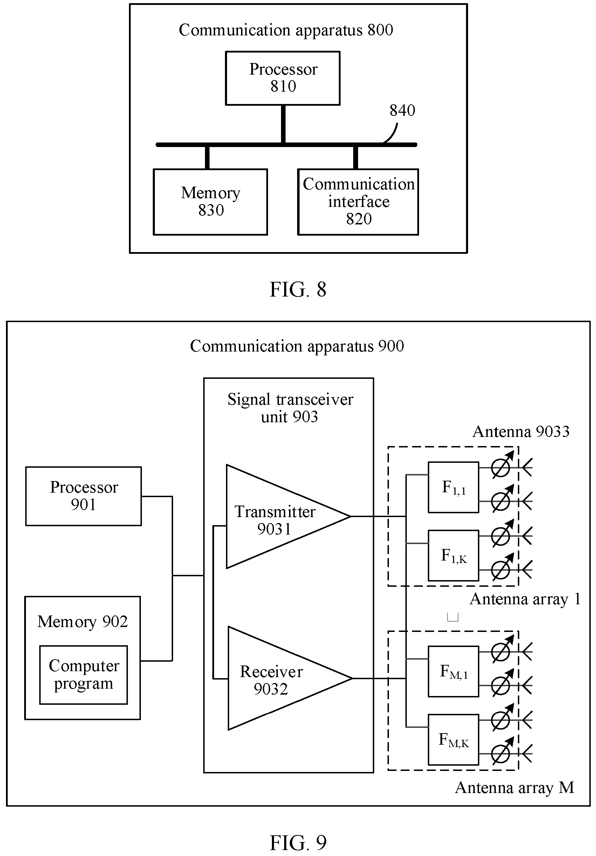

FIG. 8 is another block diagram of a communication apparatus 800 according to an embodiment of this application. The apparatus 800 may be a chip system, or may be an apparatus configured with the chip system, to implement the foregoing method embodiment. In embodiments of this application, the chip system may include a chip, or may include a chip and another discrete component.

As shown in FIG. 8, the apparatus 800 may include a processor 810. The processor 810 may be configured to execute a computer program or instructions in a memory, to implement the steps performed by the terminal device or the steps performed by the network device in the method embodiment shown in FIG. 5.

Optionally, the apparatus 800 further includes a communication interface 820. The communication interface 820 may be configured to communicate with another device through a transmission medium, so that the apparatus 800 can communicate with the another device. The communication interface 820 may be, for example, a transceiver, an interface, a bus, a circuit, or an apparatus that can implement a transceiver function. The processor 810 may input and output data through the communication interface 820, and is configured to implement the measurement reporting method in the embodiment shown in FIG. 5. Specifically, the apparatus 800 may be configured to implement a function of the network device or the terminal device in the foregoing method embodiment.

When the apparatus 800 is configured to implement the method shown in FIG. 5, the processor 810 is configured to implement a function of the processing module 710, for example, perform step 520 in FIG. 5. The communication interface 820 is configured to implement a function of the transceiver module 720, for example, perform step 510 and step 530 in FIG. 5, or optionally, perform step 505 in FIG. 5.

Optionally, the apparatus 800 further includes at least one memory 830, configured to store program instructions and/or data. The memory 830 is coupled to the processor 810. The coupling in embodiments of this application may be an indirect coupling or a communication connection between apparatuses, units, or modules in an electrical form, a mechanical form, or another form, and is used for information exchange between the apparatuses, the units, or the modules. The processor 810 may cooperate with the memory 830. The processor 810 may execute the program instructions stored in the memory 830. At least one of the at least one memory may be included in the processor.

It should be understood that the coupling in embodiments of this application may be an indirect coupling or a communication connection between apparatuses, units, or modules in an electrical form, a mechanical form, or another form, and is used for information exchange between the apparatuses, the units, or the modules. The processor 810 may cooperate with the memory 830. A specific connection medium between the processor 810, the communication interface 820, and the memory 830 is not limited in embodiments of this application. In embodiments of this application, in FIG. 8, the processor 810, the communication interface 820, and the memory 830 are connected through a bus 840. The bus 840 is represented by a bold line in FIG. 8. A connection manner between other components is merely an example for description, and is not limited thereto. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

It should be understood that, when the communication apparatus 800 is a chip used in the terminal device, the chip implements the function of the terminal device in the foregoing method embodiment. The chip of the terminal device receives a signal from another module (for example, a radio frequency module or an antenna) in the terminal device, and the signal may be sent by a network device to the terminal device. Alternatively, the chip of the terminal device sends a signal to another module (for example, a radio frequency module or an antenna) in the terminal device, and the signal may be sent by the terminal device to a network device.

When the communication apparatus 800 is a chip used in the network device, the chip implements the function of the network device in the foregoing method embodiment. The chip of the network device receives a signal from another module (for example, a radio frequency module or an antenna) in the network device, and the signal may be sent by a terminal to the network device. Alternatively, the chip of the network device sends a signal to another module (for example, a radio frequency module or an antenna) in the network device, and the signal may be sent by the network device to a terminal.

It should be noted that, when the communication apparatus 800 is the terminal device or the network device, the communication interface 820 may be a transceiver, and may specifically include a transmitter and a receiver. The transmitter is configured to send a signal, and the receiver is configured to receive a signal. When the communication apparatus 800 is the chip used in the terminal device or the network device, the communication interface 820 may be an input/output circuit, a bus, a module, a pin, or another type of communication interface input/output circuit. An input circuit in the input/output circuit may be configured to perform receiving, and an output interface in the input/output circuit may be configured to perform sending. FIG. 9 is still another diagram of a structure of a communication apparatus 900 according to an embodiment of this application.

The communication apparatus 900 may be, for example, a terminal device or a network device. The apparatus 900 may be configured to implement the method in the embodiment shown in FIG. 5. The apparatus 900 logically includes a plurality of parts, for example, a processor 901, a memory 902, and a signal transceiver unit 903. The memory 902 may be configured to store a computer program (also referred to as code or instructions). The signal transceiver unit 903 is configured to implement communication and signaling exchange between the network device and the terminal device, signal amplification, and the like. The signal transceiver unit 903 includes a transmitter 9031, a receiver 9032, and an antenna 9033. In the antenna 9033, one block represents one digital channel, F in the block is a digital precoding weight, and one phase shifter (a circle plus an oblique arrow) represents one analog channel and is connected to one or more elements. That is, in practice, one phase shifter may control a plurality of elements, or the phase shifter and the elements are cross-connected.

This application further provides a computer program product. The computer program product includes a computer program (which may also be referred to as code or instructions). When the computer program is run, the method in the embodiment shown in FIG. 5 may be implemented.

This application further provides a computer-readable storage medium. The computer-readable storage medium stores a computer program (which may also be referred to as code or instructions). When the computer program is run, the method in the embodiment shown in FIG. 5 may be implemented.

An embodiment of this application provides a communication system. The system includes the foregoing terminal device and network device.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Terms such as "unit" and "module" used in this specification may represent computerrelated entities, hardware, firmware, combinations of hardware and software, software, or software being executed. The units and the modules in embodiments of this application have a same meaning, and may be used interchangeably.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or may exist alone physically, or two or more units may be integrated into one unit.

In the foregoing embodiments, all or some of the functions of the function units may be implemented by using software, hardware, firmware, or any combination thereof. When software is used to implement the foregoing embodiments, all or a part of the foregoing embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), or an optical medium (for example, a digital versatile disc (digital video disc, DVD)), a semiconductor medium (for example, a solid-state drive (solid-state drive, SSD)), or the like.

When the functions are implemented in the form of a software functional unit and sold or used as an independent product, the functions may be stored in a computer-readable storage medium. Based on such an understanding, the technical solutions of this application essentially, or the part contributing to technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A measurement reporting method, applied to a first communication apparatus, wherein the method comprises:

   receiving a plurality of reference signals from a second communication apparatus;
   measuring the plurality of reference signals to obtain a plurality of groups of channel information; and
   sending the plurality of groups of channel information to the second communication apparatus, wherein the plurality of groups of channel information comprise a first type of channel information and/or a second type of channel information, the first type of channel information is to be reported as indicated by the second communication apparatus or as determined by the first communication apparatus according to a first preset rule, and the second type of channel information is to be reported as determined according to a second preset rule.

2. The method according to claim 1, wherein the first type of channel information is channel information corresponding to one or more group indexes indicated by the second communication apparatus, and each of the plurality of groups of channel information corresponds to a group index; and/or each of the plurality of groups of channel information corresponds to a reference signal.

3. The method according to claim 1, wherein the first type of channel information is obtained by measuring a reference signal carried on a target reference signal resource, and an identifier of the target reference signal resource and/or an identifier of a resource set to which the target reference signal resource belongs are/is indicated by the second communication apparatus.

4. The method according to any one of claims 1 to 3, wherein the first type of channel information is obtained by measuring the reference signal carried on the target reference signal resource, the target reference signal resource is determined according to the first preset rule, and the first preset rule comprises any one of the following:

   the target reference signal resource is an $m^{th}$ reference signal resource to an $n^{th}$ reference signal resource in at least one reference signal resource set, m and n are integers, and n≥m;

the target reference signal resource is a reference signal resource corresponding to a resource used for reporting channel state information CSI;

the target reference signal resource is a resource corresponding to a reference signal with a highest priority among the plurality of reference signals, and a priority of each of the plurality of reference signals is indicated by the second communication apparatus; or

the target reference signal resource is a resource corresponding to a reference signal with a highest reference signal received power RSRP among the plurality of reference signals.

5. The method according to claim 1, wherein the second type of channel information is channel information obtained by measuring a target reference signal determined according to the second preset rule, and the second preset rule comprises one or more of the following:

the target reference signal is a reference signal with a highest RSRP among the plurality of reference signals;

the target reference signal is a reference signal for which a difference between its RSRP and a previously reported RSRP is less than or equal to a first threshold among the plurality of reference signals;

the target reference signal is a reference signal among the plurality of reference signals other than a reference signal corresponding to the first type of channel information; or

the target reference signal is a reference signal having a correlation with a reference signal corresponding to the first type of channel information that is greater than or equal to a second threshold.

6. The method according to any one of claims 1 to 5, wherein each group of channel information comprises at least one of the following: a precoding matrix indicator PMI, a channel quality indicator CQI, a rank indicator RI, or a reference signal resource indicator CRI.

7. A measurement reporting method, applied to a second communication apparatus, wherein the method comprises:

sending a plurality of reference signals to a first communication apparatus; and

receiving a plurality of groups of channel information from the first communication apparatus, wherein the plurality of groups of channel information are obtained by measuring the plurality of reference signals, the plurality of groups of channel information comprise a first type of channel information and/or a second type of channel information, the first type of channel information is to be reported as indicated by the second communication apparatus or as determined by the first communication apparatus according to a first preset rule, and the second type of channel information is to be reported as determined according to a second preset rule.

8. The method according to claim 7, wherein the first type of channel information is channel information corresponding to one or more group indexes indicated by the second communication apparatus, and each of the plurality of groups of channel information corresponds to a group index; and/or each of the plurality of groups of channel information corresponds to a reference signal.

9. The method according to claim 7, wherein the first type of channel information is obtained by measuring a reference signal carried on a target reference signal resource, and an identifier of the target reference signal resource and/or an identifier of a resource set to which the target reference signal resource belongs are/is indicated by the second communication apparatus.

10. The method according to any one of claims 7 to 9, wherein the first type of channel information is obtained by measuring the reference signal carried on the target reference signal resource, the target reference signal resource is determined according to the first preset rule, and the first preset rule comprises any one of the following:

the target reference signal resource is an m$^{th}$ reference signal resource to an n$^{th}$ reference signal resource in at least one reference signal resource set, m and n are integers, and n≥m;

the target reference signal resource is a reference signal resource corresponding to a resource used for reporting channel state information CSI;

the target reference signal resource is a resource corresponding to a reference signal with a highest priority among the plurality of reference signals, and a priority of each of the plurality of reference signals is indicated by the second communication apparatus; or

the target reference signal resource is a resource corresponding to a reference signal with a highest reference signal received power RSRP among the plurality of reference signals.

11. The method according to claim 7, wherein the second type of channel information is channel information obtained by measuring a target reference signal determined according to the second preset rule, and the second preset rule comprises one or more of the following:

the target reference signal is a reference signal with a highest RSRP among the plurality of reference signals;
the target reference signal is a reference signal for which a difference between its RSRP and a previously reported RSRP is less than or equal to a first threshold among the plurality of reference signals;
the target reference signal is a reference signal among the plurality of reference signals other than a reference signal corresponding to the first type of channel information; or
the target reference signal is a reference signal having a correlation with a reference signal corresponding to the first type of channel information that is greater than or equal to a second threshold.

12. The method according to any one of claims 7 to 11, wherein each group of channel information comprises at least one of the following: a precoding matrix indicator PMI, a channel quality indicator CQI, a rank indicator RI, or a reference signal resource indicator CRI.

13. A communication apparatus, comprising:

a transceiver module, configured to receive a plurality of reference signals from a second communication apparatus; and
a processing module, configured to measure the plurality of reference signals to obtain a plurality of groups of channel information, wherein
the transceiver module is further configured to send the plurality of groups of channel information to the second communication apparatus, wherein the plurality of groups of channel information comprise a first type of channel information and/or a second type of channel information, the first type of channel information is to be reported as indicated by the second communication apparatus or as determined by the communication apparatus according to a first preset rule, and the second type of channel information is to be reported as determined according to a second preset rule.

14. The communication apparatus according to claim 13, wherein the first type of channel information is channel information corresponding to one or more group indexes indicated by the second communication apparatus, and each of the plurality of groups of channel information corresponds to a group index; and/or each of the plurality of groups of channel information corresponds to a reference signal.

15. The communication apparatus according to claim 13, wherein the first type of channel information is obtained by measuring a reference signal carried on a target reference signal resource, and an identifier of the target reference signal resource and/or an identifier of a resource set to which the target reference signal resource belongs are/is indicated by the second communication apparatus.

16. The communication apparatus according to any one of claims 13 to 15, wherein the first type of channel information is obtained by measuring the reference signal carried on the target reference signal resource, the target reference signal resource is determined according to the first preset rule, and the first preset rule comprises any one of the following:

the target reference signal resource is an $m^{th}$ reference signal resource to an $n^{th}$ reference signal resource in at least one reference signal resource set, m and n are integers, and $n \geq m$;
the target reference signal resource is a reference signal resource corresponding to a resource used for reporting channel state information CSI;
the target reference signal resource is a resource corresponding to a reference signal with a highest priority among the plurality of reference signals, and a priority of each of the plurality of reference signals is indicated by the second communication apparatus; or
the target reference signal resource is a resource corresponding to a reference signal with a highest reference signal received power RSRP among the plurality of reference signals.

17. The communication apparatus according to claim 13, wherein the second type of channel information is channel information obtained by measuring a target reference signal determined according to the second preset rule, and the second preset rule comprises one or more of the following:

the target reference signal is a reference signal with a highest RSRP among the plurality of reference signals;

the target reference signal is a reference signal for which a difference between its RSRP and a previously reported RSRP is less than or equal to a first threshold among the plurality of reference signals;

the target reference signal is a reference signal among the plurality of reference signals other than a reference signal corresponding to the first type of channel information; or

the target reference signal is a reference signal having a correlation with a reference signal corresponding to the first type of channel information that is greater than or equal to a second threshold.

18. The communication apparatus according to any one of claims 13 to 17, wherein each group of channel information comprises at least one of the following: a precoding matrix indicator PMI, a channel quality indicator CQI, a rank indicator RI, or a reference signal resource indicator CRI.

19. A communication apparatus, comprising:

a transceiver module, configured to send a plurality of reference signals to a first communication apparatus, wherein

the transceiver module is further configured to receive a plurality of groups of channel information from the first communication apparatus, wherein the plurality of groups of channel information are obtained by measuring the plurality of reference signals, the plurality of groups of channel information comprise a first type of channel information and/or a second type of channel information, the first type of channel information is to be reported as indicated by the communication apparatus or as determined by the first communication apparatus according to a first preset rule, and the second type of channel information is to be reported as determined according to a second preset rule.

20. The communication apparatus according to claim 19, wherein the first type of channel information is channel information corresponding to one or more group indexes indicated by the communication apparatus, and each of the plurality of groups of channel information corresponds to a group index; and/or each of the plurality of groups of channel information corresponds to a reference signal.

21. The communication apparatus according to claim 19, wherein the first type of channel information is obtained by measuring a reference signal carried on a target reference signal resource, and an identifier of the target reference signal resource and/or an identifier of a resource set to which the target reference signal resource belongs are/is indicated by the communication apparatus.

22. The communication apparatus according to any one of claims 19 to 21, wherein the first type of channel information is obtained by measuring the reference signal carried on the target reference signal resource, the target reference signal resource is determined according to the first preset rule, and the first preset rule comprises any one of the following:

the target reference signal resource is an $m^{th}$ reference signal resource to an $n^{th}$ reference signal resource in at least one reference signal resource set, m and n are integers, and $n \geq m$;

the target reference signal resource is a reference signal resource corresponding to a resource used for reporting channel state information CSI;

the target reference signal resource is a resource corresponding to a reference signal with a highest priority among the plurality of reference signals, and a priority of each of the plurality of reference signals is indicated by the communication apparatus; or

the target reference signal resource is a resource corresponding to a reference signal with a highest reference signal received power RSRP among the plurality of reference signals.

23. The communication apparatus according to claim 19, wherein the second type of channel information is channel information obtained by measuring a target reference signal determined according to the second preset rule, and the second preset rule comprises one or more of the following:

the target reference signal is a reference signal with a highest RSRP among the plurality of reference signals;

the target reference signal is a reference signal for which a difference between its RSRP and a previously reported RSRP is less than or equal to a first threshold among the plurality of reference signals;

the target reference signal is a reference signal among the plurality of reference signals other than a reference signal corresponding to the first type of channel information; or

the target reference signal is a reference signal having a correlation with a reference signal corresponding to the first type of channel information that is greater than or equal to a second threshold.

24. The apparatus according to any one of claims 19 to 23, wherein each group of channel information comprises at least one of the following: a precoding matrix indicator PMI, a channel quality indicator CQI, a rank indicator RI, or a reference signal resource indicator CRI.

25. A communication apparatus, comprising a processor, wherein
the processor is configured to execute a computer program or instructions in a memory, so that the apparatus implements the method according to any one of claims 1 to 6 or the method according to any one of claims 7 to 12.

26. A computer-readable storage medium, wherein the storage medium stores a computer program or instructions, and when the computer program or the instructions are executed by a computer, the method according to any one of claims 1 to 6 or the method according to any one of claims 7 to 12 is implemented.

FIG. 1

FIG. 2

$w_{1,K1-1}$  DAC  $w_{0,0}$

$w_{0,K2-1}$

$w_0 = \varphi_0$

$w_0 = \varphi_1$

$w_{1,0}$  DAC  $w_{0,0}$

$w_{0,K2-1}$

$w_0 = \varphi_m$

Second-level
weight

First-level
weight

FIG. 3

Beam 0

Beam 1

Beam 2

UE 0

UE 1

UE 2

Beam 0 coverage

Beam 1 coverage

Beam 2 coverage

FIG. 4

500

| Terminal device | | Network device |
| --- | --- | --- |

505: Reference signal configuration
information

510: Plurality of reference signals

520: Measure the plurality of reference signals to
obtain a plurality of groups of channel
information

530: Plurality of groups of
channel information

FIG. 5

CSI-RS resource set

Network device | CSI-RS 0 CSI-RS 1 CSI-RS K–1

Beam 0 (or port group 0)  Beam 1 (or port group 1)  ··· Beam K–1 (or port group K–1)

First type of channel information or second type of channel information

Terminal device

FIG. 6a

CSI-RS resource set 0    CSI-RS resource set 1

Network device | CSI-RS 0 CSI-RS 1    CSI-RS b CSI-RS K–1

Beam 0 (or port group 0)  Beam 1 (or port group 1)  ···  Beam b (or port group b)  ··· Beam K–1 (or port group K–1)

First type of channel information or second type of channel information

Terminal device

FIG. 6b

Communication apparatus 700

Processing module 710

Transceiver module 720

FIG. 7

Communication apparatus 800

Processor
810

840

Memory
830

Communication
interface
820

FIG. 8

Communication apparatus 900

Signal transceiver
unit 903

Antenna 9033

Processor
901

Transmitter
9031

$F_{1,1}$

$F_{1,K}$

Antenna array 1

Memory 902

Computer
program

Receiver
9032

$F_{M,1}$

$F_{M,K}$

Antenna array M

FIG. 9

## INTERNATIONAL SEARCH REPORT

| International application No. |
| --- |
| **PCT/CN2024/130637** |

| **A. CLASSIFICATION OF SUBJECT MATTER** |
| --- |

H04W72/542(2023.01)i;  H04W24/10(2009.01)i

According to International Patent Classification (IPC) or to both national classification and IPC

| **B. FIELDS SEARCHED** |
| --- |

Minimum documentation searched (classification system followed by classification symbols)

  IPC: H04W

Documentation searched other than minimum documentation to the extent that such documents are included in the fields searched

Electronic data base consulted during the international search (name of data base and, where practicable, search terms used)

  WPABS, ENTXTC, CNTXT, ENTXT, 3GPP, IEEE, CNKI: 测量, 上报, 参考信号, 信道, 状态, 指示, 规则, 组, 索引, 目标, 资源, 集合, 标识, 参考信号接收功率, 阈值, measurement, reporting, reference signal, channel, state, indication, rule, group, index, target, resource, set, identity, RSRP, threshold

| **C. DOCUMENTS CONSIDERED TO BE RELEVANT** |
| --- |

| Category* | Citation of document, with indication, where appropriate, of the relevant passages | Relevant to claim No. |
| --- | --- | --- |
| X | CN 111432479 A (HUAWEI TECHNOLOGIES CO., LTD.) 17 July 2020 (2020-07-17) description, paragraphs 0116-0307 | 1-3, 6-9, 12-15, 18-21, 24-26 |
| Y | CN 111432479 A (HUAWEI TECHNOLOGIES CO., LTD.) 17 July 2020 (2020-07-17) description, paragraphs 0116-0307 | 4-5, 10-11, 16-17, 22-23 |
| Y | CN 111200872 A (HUAWEI TECHNOLOGIES CO., LTD.) 26 May 2020 (2020-05-26) description, paragraphs 0248-0252 | 4-5, 10-11, 16-17, 22-23 |
| A | CN 107210795 A (HUAWEI TECHNOLOGIES CO., LTD.) 26 September 2017 (2017-09-26) entire document | 1-26 |
| A | CN 111356171 A (HUAWEI TECHNOLOGIES CO., LTD.) 30 June 2020 (2020-06-30) entire document | 1-26 |
| A | WO 2022207001 A1 (HUAWEI TECHNOLOGIES CO., LTD.) 06 October 2022 (2022-10-06) entire document | 1-26 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 February 2025** | **12 February 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/130637** |

| Patent document cited in search report | | | Publication date (day/month/year) | Patent family member(s) | | | Publication date (day/month/year) |
| --- | --- | --- | --- | --- | --- | --- | --- |
| CN | 111432479 | A | 17 July 2020 | US | 2021351825 | A1 | 11 November 2021 |
| | | | | WO | 2020143647 | A1 | 16 July 2020 |
| | | | | EP | 3902355 | A1 | 27 October 2021 |
| CN | 111200872 | A | 26 May 2020 | WO | 2020103793 | A1 | 28 May 2020 |
| | | | | US | 2021274372 | A1 | 02 September 2021 |
| | | | | EP | 3876466 | A1 | 08 September 2021 |
| CN | 107210795 | A | 26 September 2017 | WO | 2016134537 | A1 | 01 September 2016 |
| CN | 111356171 | A | 30 June 2020 | WO | 2020125422 | A1 | 25 June 2020 |
| | | | | EP | 3886485 | A1 | 29 September 2021 |
| | | | | US | 2021314122 | A1 | 07 October 2021 |
| WO | 2022207001 | A1 | 06 October 2022 | EP | 4300842 | A1 | 03 January 2024 |
| | | | | US | 2024022303 | A1 | 18 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311492289